(19) Europäisches Patentamt / European Patent Office / Office européen des brevets

(11) **EP 4 413 056 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **22799891.1**

(22) Anmeldetag: **30.09.2022**

(51) Internationale Patentklassifikation (IPC):
**C08G 18/42** (2006.01) **C08G 18/46** (2006.01)
**C08G 65/26** (2006.01) **C08G 18/48** (2006.01)

(52) Gemeinsame Patentklassifikation (CPC):
**C08G 65/2609; C08G 18/4244; C08G 18/4891;
C08G 18/72; C08G 65/2615; C08G 65/2672**

(86) Internationale Anmeldenummer:
**PCT/EP2022/077271**

(87) Internationale Veröffentlichungsnummer:
**WO 2023/057328 (13.04.2023 Gazette 2023/15)**

(54) **VERFAHREN ZUR HERSTELLUNG VON POLYOXYALKYLENPOLYESTERPOLYOLEN**

METHOD FOR PRODUCING POLYOXYALKYLENE POLYESTERPOLYOLS

PROCÉDÉ DE PRODUCTION DE POLYOLS POLYESTER POLYOXYALKYLÈNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.10.2021 EP 21201406**

(43) Veröffentlichungstag der Anmeldung:
**14.08.2024 Patentblatt 2024/33**

(73) Patentinhaber: **Covestro Deutschland AG
51373 Leverkusen (DE)**

(72) Erfinder:
• **LORENZ, Klaus**
 **41539 Dormagen (DE)**
• **KLEINIG, Frank**
 **41542 Dormagen (DE)**

(74) Vertreter: **Levpat
c/o Covestro AG
Gebäude K12
51365 Leverkusen (DE)**

(56) Entgegenhaltungen:
**EP-A2- 2 177 555 WO-A2-2013/016263**

# EP 4 413 056 B1

**Beschreibung**

Gegenstand der vorliegenden Erfindung ist ein Verfahren zur Herstellung von Polyoxyalkylenpolyesterpolyolen mit berechneten OH-Zahlen von 320 mg (KOH) / g bis 530 mg (KOH) / g durch Umsetzung einer Starterverbindung mit alkoholischen Hydroxygruppen und/oder aminischen Protonen und eines Fettsäureesters mit einem Alkylenoxid. Weitere Erfindungsgegenstände sind auch aus dem Verfahren resultierende Polyoxyalkylenpolyesterpolyole sowie ein Herstellungsverfahren für Polyurethane durch Umsetzung der erfindungsgemäßen Polyoxyalkylenpolyesterpolyole mit Polyisocyanaten.

Polyole auf Basis nachwachsender Rohstoffe wie Fettsäuretriglyceride, Zucker, Sorbit, Glycerin und Dimerfettalkohole werden bereits in vielfältiger Weise als Rohstoff bei der Herstellung von Polyurethanwerkstoffen verwendet. In Zukunft wird sich der Einsatz solcher Komponenten weiter verstärken, da Produkte aus erneuerbaren Quellen in Ökobilanzen vorteilhaft bewertet werden und die Verfügbarkeit von Rohstoffen auf petrochemischer Basis auf lange Sicht abnehmen wird. Es können durch den gezielten Einsatz von Fettsäureestern bei der Herstellung von Alkylenoxidadditionsprodukten auf Basis von Startern mit zerewitinoff-aktiven Wasserstoffatomen aber auch Polyetheresterpolyole erhalten werden, die sich durch ein besseres Lösungsvermögen für typischerweise in Hartschaumstoffformulierungen verwendete Treibmittel auf Basis von (teilhalogenierten) Kohlenwasserstoffen oder generell durch eine erhöhte Hydrophilie der aus ihnen hergestellten Werkstoffe auszeichnen.

EP 1923417 A1 offenbart ein einstufiges Verfahren zur Herstellung von Polyetheresterpolyolen durch Umsetzung von Starterverbindungen mit zerewitinoff-aktiven Wasserstoffatomen ("H-funktionelle Starterverbindungen") mit Alkylenoxiden unter Basenkatalyse in Gegenwart von Fettsäureestern als erneuerbarem Rohstoff, wobei die Fettsäurereste der Fettsäureester keine freien OH-Gruppen enthalten. Diese Polyetheresterpolyole werden als Komponenten in Formulierungen mit anderen Polyolen in der Herstellung von PUR/PIR-Hartschaumstoffen eingesetzt, wobei sich diese PUR/PIR-Systeme durch ein gutes Entformungsverhalten auszeichnen.

WO 2013/016263 A2 beschreibt ein Verfahren zur Herstellung Amin-gestarteter Polyetherpolyole, wobei teilweise erneuerbare Rohstoffe zum Einsatz kommen, sowie die Verwendung derartiger Polyetherpolyole in der Herstellung von Polyurethanhartschäumen. Das Verfahren umfasst die Umsetzung eines Amin-basierten Alkoxylierungs-Addukts mit einem Triglycerid und optional einem Polysaccharid, wobei beide aus erneuerbaren Quellen stammen.

EP 2177555 A2 betrifft ein Verfahren zur Herstellung von Polyetheresterpolyolen ausgehend von Fettsäureestern und Starterverbindungen mit zerewitinoff-aktiven Wasserstoffatomen, und deren Verwendung zur Herstellung von massiven oder geschäumten PolyurethanWerkstoffen. Das Verfahren gewährleistet eine glatte Aufnahme der dosierten Alkylenoxide, damit können diese kontinuierlich zugegebenwerden. Insbesondere eignet sich dieses Verfahren zur Herstellung von Polyetheresterpolyolen auf Basis von Starterverbindungen mit einem Schmelzpunkt nahe oder oberhalb der üblichen Reaktionstemperatur, d. h. mit einem Schmelzpunkt oberhalb von 100 °C, bzw. zur Herstellung von Polyetheresterpolyolen auf Basis von bei der üblichen Reaktionstemperatur zur Zersetzung neigenden Starterverbindungen.

In EP 2807199 A1 wird ein Verfahren zur Herstellung eines Polyoxyalkylenpolyetherester-Polyols durch Umsetzung einer Zerwitinoff-aktiven Starterverbindung mit Fettsäureestern, Alkylenoxiden unter Verwendung von basischen Imidazol-Katalysatoren offenbart, wobei die Herstellung zusätzlich in Gegenwart eines cyclischen Anhydrids von Dicarbonsäuren erfolgt. Die resultierenden Polyetherester-Polyole werden ebenfalls in der Herstellung von Hartschaumstoffen eingesetzt. Es wird vermutet, dass die Gegenwart der aromatischen Dicarbonsäurebausteine im Polyoxyalkylenpolyesterpolyolendprodukt zu verbesserten Flammschutzeigenschaften führen soll.

In WO 2021/122401 A1 wird ein Verfahren zur Herstellung von Polyoxyalkylenpolyesterpolyolen durch Umsetzung einer Starterverbindung mit Zerewitnoff-aktiven H-Atomen, eines cyclischen Dicarbonsäureanhydrids und eines Fettsäureesters mit einem Alkylenoxid in Gegenwart eines basischen Katalysators offenbart, wodurch weniger verfärbte Produkte resultieren.

Die im Stand der Technik vorgeschlagenen Verfahren erweisen sich jedoch als problematisch, wenn sehr hydrophobe Polyoxyalkylenpolyesterpolyole auf Basis von bei Raumtemperatur festen Starterverbindungen und auf Basis von Fettsäureestern, die maximal OH-Zahlen von 100 mg (KOH) / g aufweisen, hergestellt werden sollen, insbesondere solche Polyoxyalkylenpolyesterpolyole mit einem Fettsäureestergehalt von 40 Massen-% oder mehr. Es stellt sich heraus, dass häufig trübe oder gar mehrphasige Endprodukte resultieren, selbst wenn der in EP 2177555 A2 vorgeschlagene Prozess zur Anwendung kommt.

Überraschenderweise konnte die Aufgabe gelöst werden durch ein Verfahren zur Herstellung eines Polyoxyalkylenpolyesterpolyols mit einer berechneten OH-Zahl von 320 mg KOH / g bis 530 mg KOH) / g, bevorzugt von 350 mg KOH / g bis 500 mg KOH / g, durch Umsetzung einer H-funktionellen Starterverbindung (1) mit n(1) Mol alkoholischen Hydroxygruppen und/oder aminischen Protonen, bevorzugt mit n(1) Mol alkoholischen Hydroxygruppen, und eines Fettsäureesters (2) mit n(2) Mol Fettsäureester¬gruppen mit einem Alkylenoxid (3), optional in Gegenwart eines basischen Katalysators (4) und optional in einem Lösungsmittel (5), wobei die H-funktionelle Starterverbindung (1) eine oder mehrere Verbindungen umfasst, wobei mindestens eine H-funktionelle Starterverbindung (1) einen gemäß der Methode DIN EN ISO 11357-1:2016 bestimmten Schmelzpunkt von > 50,0 °C, bevorzugt von > 55,0 °C aufweist, wobei der Fettsäureester (2) eine OH-Zahl von weniger als 100 mg KOH / g aufweist, wobei der Anteil des Fettsäureesters (2) mindestens 40 % Massen-%, bezogen auf die Gesamtmasse aus der eingesetzten H-funktionellen Starterverbindung (1), dem eingesetzten Fettsäureester (2) und dem eingesetzten Alkylenoxid (3), beträgt, wobei das Verfahren folgende Schritte umfasst:

(i) Bereitstellen eines Systems (i) umfassend die H-funktionelle Starterverbindung (1) optional den basischen Katalysator (4) optional in einem Lösungsmittel (5) in einem Reaktionsgefäß,

(ii) Zugabe von n(3-1) Mol einer ersten Teilmenge des Alkylenoxids (3) zu dem System (i) über einen Zeitraum $t_1$ unter Bildung eines Intermediats (ii),

(iii) Entfernung gegebenenfalls vorhandenen Lösungsmittels (5) aus dem Intermediat (ii) unter Bildung eines Intermediats (iii),

(iv) Zugabe des Fettsäureesters (2) zum Intermediat (ii) oder zum Intermediat (iii) unter Bildung des Intermediats (iv), wobei hierbei dem Intermediat (ii) oder dem Intermediat (iii) n(2) Mol Fettsäureestergruppen zugeführt werden,

(v) Zugabe von n(3-2) Mol einer zweiten Teilmenge des Alkylenoxids (3) zum Intermediat (iv) über einen Zeitraum $t_2$ unter Bildung des Polyoxyalkylenpolyesterpolyols,

wobei $(n(3-2)/n(2)) \cdot t_2/[h] \geq 1,0$; bevorzugt $1,0 \leq (n(3-2)/n(2)) \cdot t_2/[h] \leq 10,0$; besonders bevorzugt $1,0 \leq (n(3-2)/n(2)) \cdot t_2/[h] \leq 8,0$ ist,

wobei $n(2)/n(3-2) \geq 1,05$; bevorzugt $1,05 \leq n(2)/n(3-2) \leq 10,0$; besonders bevorzugt $1,25 \leq n(2)/n(3-2) \leq 6$ ist, und

wobei $n(3-1)/n(1) \geq 0,43$; bevorzugt $0,43 \leq n(3-1)/n(1) \leq 0,92$, besonders bevorzugt $0,44 \leq n(3-1)/n(1) \leq 0,80$ ist.

Der Ausdruck "$t_2/[h]$" bezeichnet den Zahlenwert des in Stunden angegebenen Zeitraums $t_2$.

Im Rahmen der vorliegenden Erfindung sind *Polyoxyalkylenpolyesterpolyole* als Produkte der Reaktion von Starterverbindungen (1), Fettsäureestern (2) und Alkylenoxiden (3) zu verstehen, wobei durch die Umsetzung der Fettsäureester (2) Estereinheiten erhalten werden und die Ringöffnungsprodukte der Alkylenoxide (3) auch zu Etherbindungen führen können. Aus der Starterverbindung (1) mit n(1) Mol alkoholischen Hydroxygruppen und/oder aminischen Protonen, bevorzugt mit n(1) Mol alkoholischen Hydroxygruppen, entstehen in einem solchen Verfahren Polyoxyalkylenpolyesterpolyole mit Hydroxylendgruppen.

Unter *aminischen Protonen* sind Protonen von Ammoniak, primären und sekundären Aminen zu verstehen, wobei ein primäres Amin mit einer $NH_2$-Gruppe zwei aminische Protonen zur Verfügung stellt, wodurch zwei alkoholische Hydroxygruppen durch Anlagerung von Alkylenoxiden gemäß des allgemeinen Fachwissens resultieren. Analog liefert ein sekundäres Amin ein aminisches Proton und Ammoniak drei aminische Protonen.

Erfindungsgemäß sind unter *alkoholischen Hydroxygruppen* Hydroxygruppen eines Alkohols der Formel R-OH zu verstehen, wobei R eine Alkyl-, Aryl- oder Cycloalkylgruppe und R ungleich H (Wasserstoff) ist. Die alkoholische Hydroxygruppe stellt ein alkoholisches Proton zur Verfügung, wodurch auch wiederum eine alkoholische Hydroxygruppe durch Anlagerung von Alkylenoxiden gemäß des allgemeinen Fachwissens resultiert. Die von der Starterverbindung eingebrachte Zahl an n(1) mol alkoholischen Hydroxygruppen berechnet sich wie folgt:

$$n(1) = \sum_{i=1}^{i=n} n_i \times F_i$$

mit: $n_i$ = eingesetzte Molzahl der Starterkomponente i
$F_i$ = Hydroxyfunktionalität der Starterkomponente i

Die aus aminischen Starterverbindungen entstehende Zahl an n(1) mol alkoholischen Hydroxygruppen berechnet sich wie folgt:

$$n(1) = \sum_{j=1}^{j=n} n_j \times F_j$$

mit: $n_j$ = eingesetzte Molzahl der aminischen Starterkomponente j

$F_j$ = Zahl der von der aminischen Starterkomponente j pro Molekül eingebrachten aminischen Protonen

Die OH-Zahl des erfindungsgemäßen Polyoxyalkylenpolyesterpolyols wird wie folgt berechnet ($OHZ_{ber}$). Die OHZ wird angegeben in mg KOH / g

$$OHZ_{ber} = \frac{\sum_i mi_i \times OHZ_i + \sum_j m_j \times OHZ_j + \sum_f m_f \times OHZ_f}{Ansatzmasse}$$

mit: Ansatzmasse = Summe der Massen aller zugegebenen Komponenten abzüglich der Masse des ggf. in Schritt (iii) abgetrennten Lösungsmittels

$m_i$ = Masse der hydroxyfunktionellen Starterkomponente i

mj = Masse der aminfunktionellen Starterkomponente j

$m_f$ = Masse des Fettsäureesters f

$OHZ_i$ = OH-Zahl der Starterkomponente i

$OHZ_j$ = effektive OH-Zahl der aminischen Starterkomponente j

$OHZ_f$ = OH-Zahl des Fettsäureesters f

Die OH-Zahlen hydroxyfunktioneller Starterkomponenten ($OHZ_i$) bzw. die OH-Zahlen der Fettsäureester ($OHZ_f$) können nach folgenden Formeln berechnet werden, sofern die Molmassen $M_i$ und die Hydroxyfunktionalitäten $F_i$ der Starterkomponenten bzw. die Molmassen $M_f$ und die Hydroxyfunktionalitäten $F_f$ der Fettsäureester bekannt sind:

$$OHZ_i = \frac{56100 \times F_i}{M_i}$$

$$OHZ_f = \frac{56100 \times F_f}{M_f}$$

Entsprechend kann nach folgender Formel für aminische Starterverbindungen die effektive OH-Zahl ($OHZ_j$) berechnet werden, wenn die Zahl $F_j$ der pro Molekül der aminischen Starterverbindung j eingebrachten aminischen Protonen und die Molmasse $M_j$ der aminischen Starterverbindung j bekannt sind:

$$OHZ_j = \frac{56100 \times F_j}{M_j}$$

Sind $M_i$, $F_i$, $M_f$ und / oder $F_f$ nicht bekannt, was insbesondere häufig für $F_f$ und $M_f$ der Fall sein dürfte, so können die entsprechenden OH-Zahlen $OHZ_i$ und $OHZ_f$ auch über titrimetrische Methoden, beispielsweise gemäß der Vorschrift der DIN 53240, bestimmt werden.

Nachfolgend werden erfindungsgemäße Ausführungsformen offenbart, welche beliebig miteinander kombiniert werden können, solange sich aus dem fachlichen Kontext nicht das Gegenteil ergibt.

Unter *H-funktionellen_Starterverbindungen (1)* im Sinne der Erfindung werden Verbindungen verstanden, die mindestens eine alkoholische Hydroxygruppe und/oder mindestens ein aminisches Proton, bevorzugt mindestens eine alkoholischen Hydroxygruppe aufweisen.

Erfindungsgemäß umfasst die H-funktionelle Starterverbindung (1) eine oder mehrere Verbindungen, wobei mindestens eine (erste) H-funktionelle Starterverbindung (1) einen gemäß der Methode DIN EN ISO 11357-1:2016 bestimmten Schmelzpunkt von > 50,0 °C bevorzugt von >55,0 °C, aufweist.

Geeignete H-funktionelle Starterverbindungen ("Starter") weisen bevorzugt Funktionalitäten von 2 bis 8 auf, in bestimmten Fällen aber auch Funktionalitäten bis 35. Ihre Molmassen betragen von 17 g/mol bis 1.200 g/mol.

In einer Ausführungsform des erfindungsgemäßen Verfahrens weist die (erste) Starterverbindung (1) einen Schmelzpunkt von mehr als 65 °C, bevorzugt von 65 °C bis 265 °C und besonders bevorzugt von 80 °C bis180 °C auf.

In einer bevorzugten Ausführungsform des erfindungsgemäßen Verfahrens ist die (erste) H-funktionelle Starterverbindung (1) mit dem Schmelzpunkt von > 50,0 °C, eine oder mehrere Verbindungen und wird ausgewählt aus der Gruppe bestehend aus Tri¬methylol¬propan, Pentaerythrit, Sorbitol, Saccharose, Hydro¬chinon, Brenz-catechin, Resorcin, Bisphenol F, Bisphenol A, 1,3,5-Tri¬hydroxy¬benzol, 1,12-Dodecandiol, die Isomere des Diaminotoluols, die Isomere des Diaminodiphenylmethans, bevorzugt aus der Gruppe bestehend aus Pentaerythrit, Sorbitol und Saccharose.

Die (erste) H-funktionelle Starterverbindung (1) mit dem Schmelzpunkt von > 50,0 °C wird entweder einzeln oder als Gemisch aus mindestens zwei (ersten) H-funktionellen Starterverbindungen (1) eingesetzt.

In einer Ausführungsform des erfindungsgemäßen Verfahrens umfasst die H-funktionelle Starterverbindung (1) noch mindestens eine zweite H-funktionelle Starterverbindung mit einem Schmelzpunkt von $\leq$ 50 °C.

In einer bevorzugten Ausführungsform des erfindungsgemäßen Verfahrens ist die zweite H-funktionelle Starterverbindung mit einem Schmelzpunkt von $\leq$ 50 °C eine oder mehrere Verbindungen ist und ausgewählt wird aus der Gruppe bestehend aus Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, Glycerin, Triethanolamin, Ammoniak, Ethanolamin, Diethanolamin, Isopropanolamin, Diisopropanolamin, Ethylendiamin, Hexamethylendiamin, Anilin und den Isomeren des Toluidins, bevorzugt aus Propylenglykol, Ethylenglykol und Glycerin.

Die (zweite) H-funktionelle Starterverbindung (1) mit dem Schmelzpunkt von $\leq$ 50 °C wird entweder einzeln oder als Gemisch aus mindestens zwei (zweiten) H-funktionellen Starterverbindungen (1) eingesetzt.

In einer Ausführungsform des erfindungsgemäßen Verfahrens beträgt das Massenverhältnis der eingesetzten zweiten H-funktionellen Starterverbindung mit einem Schmelzpunkt<50°C zu der eingesetzten ersten H-funktionellen Starterverbindung mit einem Schmelzpunkt von $\geq$ 50 °C von 0,1:1 bis 0,5:1 bevorzugt von 0,2:1 bis 0,4:1.

Der Oberbegriff "Fettsäureester" bezeichnet im Folgenden Fettsäureglyceride, insbesondere Fettsäuretriglyceride, und/oder Fettsäureester auf Basis anderer mono- und mehrfunktioneller Alkohole oder Gemische solcher Fettsäureester bzw. Fettsäureglyceride. Die Fettsäurereste der Fettsäureester können, wie beim Ricinusöl, ihrerseits Hydroxygruppen tragen. Natürlich ist es auch möglich Fettsäureester, deren Fettsäurereste nachträglich mit Hydroxygruppen modifiziert wurden, im erfindungsgemäßen Verfahren einzusetzen. Derart modifizierte Fettsäurereste können beispielsweise durch Epoxidierung der olefinischen Doppelbindungen und anschließende Ringöffnung der Oxiranringe mittels Nucleophilen oder durch Hydroformylierung / Hydrierung erhalten werden. Auch werden ungesättigte Öle zu diesem Zweck häufig bei erhöhter Temperatur mit Luftsauerstoff behandelt.

Alle Triglyceride eignen sich als Substrate für die erfindungsgemäßen Verfahren. Beispielhaft genannt seien Baumwollsaatöl, Erdnussöl, Kokosöl, Leinöl, Palmkernöl, Olivenöl, Maisöl, Palmöl, Rizinusöl, Lesquerellaöl, Rapsöl, Sojaöl, Sonnenblumenöl, Heringsöl, Sardinenöl und Talg. Die Fettsäure(tri)glyceride und die Fettsäureester anderer mono- und mehrfunktioneller Alkohole können auch im Gemisch eingesetzt werden. Die OH-Zahl eines solchen Fettsäureesters bzw. Fettsäureestergemisches beträgt maximal 100 mg (KOH) / g.

In einer Ausführungsform des erfindungsgemäßen Verfahrens weist der Fettsäureester (2) keine freien Hydroxylgruppen in den Fettsäureresten auf.

In einer Ausführungsform des erfindungsgemäßen Verfahrens ist der Fettsäureester (2) eine oder mehrere Verbindungen und wird ausgewählt aus der Gruppe bestehend aus Baumwollsaatöl, Erdnussöl, Kokosöl, Leinöl, Palmkernöl, Olivenöl, Maisöl, Palmöl, Jatrophaöl, Rapsöl, Sojaöl, Sonnenblumenöl, Heringsöl, Sardinenöl und Talg, bevorzugt Sojaöl.

Die Fettsäureester (2) werden entweder einzeln oder als Gemisch aus mindestens zwei Fettsäureestern eingesetzt.

Erfindungsgemäß beträgt der Anteil des Fettsäureester (2) mindestens 40 % Massen-% bezogen auf die Gesamtmasse aus der eingesetzten H-funktionellen Starterverbindung (1), dem eingesetzten Fettsäureester (2) und dem eingesetzten Alkylenoxid (3).

In einer bevorzugten Ausführungsform des erfindungsgemäßen Verfahrens beträgt der Anteil des Fettsäureester (2) von 40 Massen-% bis 60 Massen-%, bevorzugt von 42 Massen-% bis 58 Massen-%, und besonders bevorzugt von 45 Massen-% bis 55 Massen-% bezogen auf die Gesamtmasse aus der eingesetzten H-funktionellen Starterverbindung (1), dem eingesetzten Fettsäureester (2) und dem eingesetzten Alkylenoxid (3).

Geeignete Alkylenoxide (3) sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Beispielsweise kann in Schritt (v) ein anderes Alkylenoxid dosiert werden als in Schritt (ii). Produkte mit Ethylenoxidendblöcken sind in der Regel durch erhöhte Konzentrationen an primären Endgruppen gekennzeichnet, welche den Systemen eine gegebenenfalls erforderliche höhere Isocyanatreaktivität verleihen. Bevorzugt eingesetzte Alkylenoxide sind Propylenoxid und / oder Ethylenoxid, besonders bevorzugt wird Propylenoxid verwendet.

In einer Ausführungsform des erfindungsgemäßen Verfahrens ist das Alkylenoxid (3) Propylenoxid und/oder Ethylenoxid, bevorzugt Propylenoxid.

Die Alkylenoxide (3) werden entweder einzeln oder als Gemisch aus mindestens zwei Alkylenoxiden eingesetzt.

Basischer Katalysator (4)

In einer Ausführungsform des erfindungsgemäßen Verfahrens wird der basische Katalysator (4) in Schritt (i) und/oder in Schritt (iv) zugegeben. Bevorzugt wird der basische Katalysator in Schritt (i) zugegeben.

In einer Ausführungsform des erfindungsgemäßen Verfahrens wird als basischer Katalysator ein Alkalimetall- oder Erdalkalimetallhydroxid, bevorzugt Kaliumhydroxid, verwendet. Der Katalysator kann dem Reaktionsgemisch in Form wässriger Lösungen oder wasserfrei zugefügt werden. Bevorzugt wird vor der Zugabe der Fettsäureester zum Reaktionsgemisch etwa vorhandenes Lösungswasser oder durch die Deprotonierung der OH-Gruppen entstandenes Wasser entfernt. Die Entwässerung kann beispielsweise durch Tempern unter vermindertem Druck bei Temperaturen von 80 bis 150 °C erfolgen und gegebenenfalls durch Strippen mit Inertgas unterstützt werden. Die Katalysatorkonzentration beträgt hierbei bevorzugt 0,02 bis 1 Massen-%, bezogen auf die Endproduktmenge, besonders bevorzugt werden 0,05 bis 0,6 Massen-% eingesetzt.

In einer bevorzugteren Ausführungsform des erfindungsgemäßen Verfahrens erfolgt die Umsetzung in Schritt (i) und/oder in Schritt (iv) bevorzugt in Schritt (i) in Gegenwart eines basischen Katalysators (4), wobei der basische Katalysator bevorzugt ein Amin, bevorzugt ein aromatisches Amin ist.

In einer besonders bevorzugten Ausführungsform des erfindungsgemäßen Verfahrens ist das Amin ein aromatisches Amin und das aromatische Amin eine oder mehrere Verbindungen, die ausgewählt wird aus der Gruppe bestehend aus Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol, und N,N-dimethylaminopyridin.

Eine umfassende Übersicht verwendbarer Amine ist von M. Ionescu et. al. in "Advances in Urethanes Science and Technology", 1998, 14, 151-218 gegeben worden. Die aminischen Katalysatoren können in auf die Endproduktmenge bezogenen Konzentrationen von 200 ppm bis 10.000 ppm eingesetzt werden, bevorzugt ist der Konzentrationsbereich von 200 ppm bis 5.000 ppm.

In einer weiteren, weniger bevorzugten Ausführungsform des erfindungsgemäßen Verfahrens werden als basische Katalysatoren Carbonsäuresalze von Alkali- oder Erdalkalimetallen eingesetzt. Die zugrundeliegenden Carbonsäuren können ein- oder mehrbasisch sein. Beispiele sind Salze der Essig-, Propion- und Adipinsäure. Solche Alkali- oder Erdalkalicarboxylate werden üblicherweise in Mengen von 0,04 bis 2 Massen-%, bezogen auf die Endproduktmenge, eingesetzt.

Erfindungsgemäß sind geeignete Lösungsmittel (5) bzw. Suspendiermittel inerte organische Lösungsmittel wie beispielsweise Toluol oder auch Wasser. Insbesondere kann durch die Gegenwart von Wasser in Schritt (ii) des erfindungsgemäßen Verfahrens der Umsatz der mindestens einen H-funktionellen Starterverbindung mit einem Schmelzpunkt > 50 °C mit Alkylenoxiden gefördert werden. Um qualitätvolle, d.h. nebenproduktarme Alkylenoxidadditionsprodukte zu erhalten, empfiehlt es sich, Wasser nach dem Erreichen eines bestimmten Alkoxylierungsgrades aus dem Reaktionsgemisch zu entfernen, siehe hierfür beispielsweise die deutsche Offenlegungsschrift DE 1443022. Die Abtrennung des Wassers in Schritt (iii) des erfindungsgemäßen Verfahrens sollte zudem vor der Zugabe des Fettsäureesters in Schritt (iv) erfolgen, um unerwünschte Hydrolysereaktionen zu vermeiden.

In einer Ausführungsform des erfindungsgemäßen Verfahrens umfasst in Schritt i) das System (i) ein Lösungsmittel (5), wobei das Lösungsmittel (5) Wasser enthält und bevorzugt das Lösungsmittel (5) Wasser ist.

In einer bevorzugten Ausführungsform des erfindungsgemäßen Verfahrens umfasst in Schritt i) das System (i) die H-funktionelle Starterverbindung (1) den basischen Katalysator (4) und das Lösungsmittel (5), wobei das Lösungsmittel (5) Wasser enthält und bevorzugt das Lösungsmittel (5) Wasser ist.

Die Schritte (i), (ii), (iii), (iv) und (v) des erfindungsgemäßen Verfahrens werden im Einzelnen wie nachfolgend beschrieben durchgeführt:
In Schritt (i) des erfindungsgemäßen Verfahrens wird ein System (i) umfassend die Starterverbindung (1) und optional den basischen Katalysator (4) optional in einem Lösungsmittel (5) in einem Reaktionsgefäß bereitgestellt.

Erfindungsgemäß umfasst das System (i) in Schritt (i) auch die Starterverbindung (1), die Starterverbindung (1) und den basischen Katalysator (4) oder die Starterverbindung (1) und das Lösungsmittel (5), insofern in Schritt (i) nur die Starterverbindung (1), die Starterverbindung (1) und der basische Katalysator (4) oder die Starterverbindung (1) und das Lösungsmittel (5) eingesetzt werden.

Bevorzugt wird der basische Katalysator (4) und das Lösungsmittel (5) in Schritt (i) verwendet, so dass ein System (i) umfassend die Starterverbindung (1) und den basischen Katalysator (4) mit einem Lösungsmittel (5) in einem Reaktionsgefäß bereitgestellt wird.

Das System (i) wird durch Rühren oder Umpumpen über ein dispergierend wirkendes Aggregat unter Inertisierung des Reaktionsgefäßes (beispielsweises durch mehrmaliges Beaufschlagen mit Stickstoff, jeweils gefolgt von Entspannen auf Atmosphärendruck, ggf. Evakuieren auf Drücke < 1 bar) hergestellt. Um die Mischung / Dispergierung der Komponenten zu erleichtern, kann bei erhöhter Temperatur, beispielsweise bei 50 bis 150 °C und unter Inertgasatmosphäre (wie beispielsweise Stickstoff) gerührt bzw. umgepumpt werden. Es ist im Allgemeinen nicht notwendig, eine bestimmte Mindestrühr- bzw. Mindestumpumpzeit einzuhalten.

In Schritt (ii) des erfindungsgemäßen Verfahrens werden n(3-1) Mol einer ersten Teilmenge des Alkylenoxids (3) zu dem System (i) über einen Zeitraum $t_1$ zugegeben unter Bildung eines Intermediats (ii).

Die Zugabe der ersten Teilmenge des Alkylenoxids (3) zu dem System (i) erfolgt dabei bei Temperaturen von 70 - 170 °C, bevorzugt 100 - 150 °C (70 - 150 °C bei Verwendung von Aminkatalysatoren) über einen Zeitraum $t_1$ von bevorzugt 120 min bis 12 h, besonders bevorzugt von 150 min bis 11 h.

Das Alkylenoxid (3) wird in der gängigen Weise dem Reaktor kontinuierlich derart zugeführt, dass die sicherheitstechnischen Druckgrenzen des verwendeten Reaktorsystems nicht überschritten werden. Üblicherweise werden solche Reaktionen im Druckbereich von 10 mbar bis 10 bar durchgeführt. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Die Alkylenoxide (3) können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei Dosierung in die Flüssigphase sollten die Dosieraggregate selbstleerend ausgelegt sein, beispielsweise durch Anbringen der Dosierbohrungen an der Unterseite des Verteilerrings. Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die Alkylenoxid-Vorratsbehälter verhindert werden.

Vorzugsweise erfolgt die Umsetzung der ersten Teilmenge des Alkylenoxids (3) mit dem System (i) bei einer Temperatur von 70 bis 170 °C, besonders bevorzugt bei einer Temperatur von 100 bis 150 °C. Die Temperatur kann während der Alkylenoxiddosierphase innerhalb der beschriebenen Grenzen variiert werden: Um eine optimale Abstimmung zwischen hohem Alkylenoxidumsatz und geringer Nebenproduktbildung bei Verwendung empfindlicher Starterverbindungen (wie beispielsweise Saccharose) zu erreichen, kann zunächst bei niedrigen Reaktionstemperaturen (beispielsweise bei 70 bis 110 °C) alkoxyliert werden, und erst bei hinreichendem Starterumsatz (d. h. sobald mindestens 50 Massen-% der eingesetzten Starterverbindungen (1) mit Alkylenoxid reagiert haben) zu höheren Reaktionstemperaturen (beispielsweise auf 110 bis 130 °C) übergegangen werden. Nach Ende der Dosierphase für die erste Teilmenge des Alkylenoxids (3) schließt sich üblicherweise eine Nachreaktionsphase an, in der restliches Alkylenoxid abreagiert. Nachreaktionen können gegebenenfalls bei höheren Temperaturen (d.h. nach Anhebung der Temperatur auf 100 bis 170 °C, bevorzugt 100 bis 150 °C) durchgeführt werden. Das Ende einer solchen Nachreaktionsphase ist erreicht, wenn bei annähernd konstanter Temperatur kein weiterer oder nur noch ein sehr langsamer Druckabfall im Reaktionskessel feststellbar ist.

Die Temperatur der exothermen Alkylenoxidadditionsreaktion wird durch Kühlung auf dem gewünschten Niveau gehalten. Gemäß dem Stand der Technik zur Auslegung von Polymerisationsreaktoren für exotherme Reaktionen (z. B. Ullmann's Encyclopedia of Industrial Chemistry, Band B4, Seite 167ff, 5. Ausgabe, 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten-Rohrbündel- oder Mischerwärmetauschern. Diese sollten vorteilhafterweise so ausgelegt sein, dass auch zu Beginn der Dosierphase, d. h. bei kleinem Füllstand und / oder in Gegenwart eines möglicherweise heterogenen Reaktorinhalts (beispielsweise bei Vorliegen von Feststoffdispersionen oder Suspensionen bzw. Emulsionen) effektiv gekühlt werden kann.

In einer Ausführungsform des erfindungsgemäßen Verfahrens wird in Schritt (iii) das gegebenenfalls vorhandene Lösungsmittel (5) aus dem Intermediat (ii) unter Bildung eines Intermediats (iii) entfernt. Im erfindungsgemäßen Verfahren wird Schritt (iii) bevorzugt durchgeführt.

Um die Anwesenheit des Lösungsmittels (5), bevorzugt Wasser als Lösungsmittel (5), mit Sicherheit auszuschließen, kann seine Entfernung vor der Zugabe des Fettsäureesters (2) aus dem Intermediat (ii) durch Vakuum bei Temperaturen von 80 - 150 °C (40 - 130 °C bei Verwendung von Aminkatalysatoren), gegebenenfalls durch zusätzliches Strippen mit Inertgas, unterstützt werden. Werden Amine als Katalysatoren verwendet, können diese gegebenenfalls auch erst nach einem solchen Entwässerungsschritt zugesetzt werden. Nach Entfernung des Lösungsmittels (5), bevorzugt Wasser, resultiert in Schritt (iii) das Intermediat (iii) .

In Schritt (iv) des erfindungsgemäßen Verfahrens wird der Fettsäureester (2) ) zum Intermediat (ii) oder zum Intermediat (iii) unter Bildung des Intermediats (iv) zugegeben, wobei hierbei dem Intermediat (ii) oder dem Intermediat (iii) n(2) Mol Fettsäureestergruppen zugeführt werden.

In einer bevorzugten Ausführungsform des erfindungsgemäßen Verfahrens wird in Schritt (iv) der Fettsäureester (2) zum Intermediat (iii) unter Bildung des Intermediats (iv) zugegeben, wobei hierbei dem Intermediat (iii) n(2) Mol Fettsäureestergruppen zugeführt werden.

Die Molzahl n(2) der dem Intermediat (ii) bzw. optional dem Intermediat (iii) zugeführten Fettsäureestergruppen kann der Fachmann bei bekannter Struktur und Molmasse des Fettsäureesters leicht berechnen. Beispielsweise enthalten 2000 g des Triglycerids Sojaöl (Molmasse: 880 Da) 6,8 mol Estergruppen. Alternativ kann bei unbekannter Struktur des Fettsäureesters die Zahl der enthaltenen Estergruppen auch gemäß DIN 53401 über die Verseifungszahl bestimmt werden.

Das Intermediat (iv) wird durch Rühren oder Umpumpen über ein dispergierend wirkendes Aggregat unter Inertisierung des Reaktionsgefäßes (beispielsweises durch mehrmaliges Beaufschlagen mit Stickstoff, jeweils gefolgt von Entspannen auf Atmosphärendruck, ggf. Evakuieren auf Drücke < 1 bar) hergestellt. Um die Mischung / Dispergierung der Komponenten zu erleichtern, kann bei erhöhter Temperatur, beispielsweise bei 50 bis 150 °C und unter Inertgasatmosphäre (wie beispielsweise Stickstoff) gerührt bzw. umgepumpt werden. Es ist im Allgemeinen nicht notwendig, eine bestimmte Mindestrühr- bzw. Mindestumpumpzeit einzuhalten.

In Schritt (v) des erfindungsgemäßen Verfahrens werden n(3-2) Mol einer zweiten Teilmenge des Alkylenoxids (3) zum Intermediat (iv) über einen Zeitraum $t_2$ zugegeben unter Bildung des erfindungsgemäßen Polyoxyalkylenpolyesterpolyols.

Die empfohlenen Reaktionsbedingungen und apparatetechnischen Parameter entsprechen denen, die bereits für Schritt (ii) beschrieben worden sind. Auch Schritt (v) schließt in der Regel mit einem Nachreaktionsschritt ab, dieser kann ebenfalls bei höheren Temperaturen (d.h. nach Anhebung der Temperatur auf 100 bis 170 °C, bevorzugt 100 bis 150 °C) durchgeführt werden. Das Ende einer solchen Nachreaktionsphase ist erreicht, wenn bei annähernd konstanter Temperatur kein weiterer oder nur noch ein sehr langsamer Druckabfall im Reaktionskessel feststellbar ist. Eine solches Kriterium für das Ende der Nachreaktionszeit kann individuell festgelegt werden. Üblich ist beispielsweise das Erreichen einer Druckabfallrate von 20 mbar pro Stunde bei Drücken im Bereich von ca. 2 bar oder höher. Wird eine solche für die Nachreaktionsdauer festgelegte Druckabfallrate erreicht oder unterschritten, wird empfohlen, die Temperatur auf Werte unter 100 °C, bevorzugt auf Werte unter 80 °C abzusenken, um die Bildung unerwünschter Nebenkomponenten zu unterdrücken.

Das aus Schritt (v) resultierende rohe Polyoxyalkylenpolyetheresterpolyol kann optional Aufarbeitungsschritten unterzogen werden, um etwaige Katalysatorspuren zu entfernen oder zu desaktivieren. Im Falle von mit Aminen katalysierten Alkylenoxidadditionsreaktionen sind solche Nachbehandlungsschritte im Allgemeinen nicht erforderlich. Die optionale Entfernung des Katalysators aus dem aus Schritt (v) resultierenden rohen Polyoxyalkylenpolyetheresterpolyol kann auf verschiedene Weise erfolgen: Beispielsweise kann der basische Katalysator, beispielsweise KOH, mit verdünnten Mineralsäuren wie Schwefelsäure oder Phosphorsäure neutralisiert werden. Wird unter Verwendung starker verdünnter Mineralsäuren (pKa der 1. Dissoziationsstufe < 2,8) neutralisiert, sollte die Neutralisation bei verhältnismäßig tiefen Temperaturen, beispielsweise bei 20 bis 80 °C, bevorzugt bei 20 - 60 °C, durchgeführt werden und die zur Neutralisation notwendige Säuremenge dem alkalischen Alkylenoxidadditionsprodukt möglichst schnell zugeführt werden, so dass die basischen Reaktionsprodukte gleichzeitig hydrolysiert und neutralisiert werden. Es empfiehlt sich also, auf einen separaten Hydrolyseschritt vor Zugabe der Neutralisationssäure zu verzichten. Mit einer solchen Vorgehensweise werden Nebenreaktionen an den Esterbindungen der Polyoxyalkylenpolyetheresterpolyole weitestgehend ausgeschlossen. Die bei der Neutralisation entstehenden Salze werden abgetrennt, beispielsweise durch Filtration. Ausnahmen bilden die in EP-A 2028211 und WO-A 2009106244 beschriebenen Polyetherpolyolherstellverfahren. Alternativ kann die Neutralisation mit Hydroxycarbonsäuren (wie beispielsweise Milchsäure, wie in WO-A 9820061 und US-A 2004167316 beschrieben) erfolgen. Ebenso geeignet zur Neutralisation sind Carbonsäuren wie beispielsweise Ameisensäure (vgl. US 4,521,548) oder auch Adipinsäure. Um eine für die angestrebte Anwendung ausreichend hohe Protonenkonzentration im Polyoxyalkylenpolyetheresterpolyol zu erreichen, werden (Hydroxy)Carbonsäuren häufig in zur zu neutralisierenden Menge an basischem Katalysator deutlich überschüssiger Menge eingesetzt. Die nach Neutralisation mit manchen Carbonsäuren (wie beispielsweise Hydroxycarbonsäuren oder Ameisensäure) entstehenden Metallcarboxylate sind in den Polyoxyalkylenpolyetheresterpolyolen klar löslich, so dass die Abtrennung der Salze hier entfallen kann. Die Neutralisation kann beispielsweise auch durch Zugabe von cyclischen Dicarbonsäureanhydriden, wie Phthalsäureanhydrid, Maleinsäureanhydrid, Tetrahydrophthalsäureanhydrid oder Bernsteinsäureanhydrid erfolgen, wobei ebenfalls in den erfindungsgemäßen Polyoxyalkylenpolyetheresterpolyolen lösliche Salze erhalten werden. Desgleichen ist die Verwendung von Ringöffnungsprodukten cyclischer Carbonsäureanhydride mit Polyolen, also von Dicarbonsäurehalbestern, als Neutralisationsagenzien möglich. Schließlich sei noch darauf hingewiesen, dass sich die unvollständig alkoxylierten Oxosäuren des Phosphors ebenfalls als Neutralisationssäuren eignen. Ebenfalls möglich ist zur Entfernung des Katalysators der Einsatz von sauren Kationenaustauschern, wie beispielsweise in DE-A 100 24 313 beschrieben. Des Weiteren können die Katalysatoren mittels Adsorbentien wie beispielsweise Schichtsilikaten (Bentonit, Attapulgit), Diatomeenerde oder auch synthetischen Magnesiumsilikaten (wie AMBOSOL® oder BriteSorb®) abgetrennt werden. Solche Aufreinigungsverfahren sind beschrieben in RO 118433, US 4,507,475, EP-A 0693513 und EP-A 1751213. Phasentrennverfahren stellen im Prinzip eine weitere Möglichkeit zur Abtrennung von Katalysatorresten dar, jedoch sind im Allgemeinen die Wasserlöslichkeiten der Polyoxyalkylenpolyetheresterpolyole oder von in ihnen enthaltenen Komponenten für eine effektive Durchführung von Phasentrennverfahren zu hoch. Phasentrennverfahren sind beispielsweise beschrieben in WO-A 0114456, JP-A 6-157743, WO-A 9620972 und US-A 3823145.

Den erfindungsgemäßen Polyoxyalkylenpolyetheresterpolyolen können Antioxidanzmittel (z. B. auf Basis von Phenolderivaten und / oder auf Basis von aromatischen Aminen) zugesetzt werden. Wird ein Alkalimethallhydroxid zur Katalyse der Alkylenoxidaddition an die eingesetzten Starterverbindungen verwendet, so empfiehlt es sich, solche Antioxidanzmittel erst nach Neutralisierung bzw. Abtrennung dieser Katalysatorspuren zuzusetzen, da auf diese Weise weniger stark verfärbte Polyoxyalkylenpolyetheresterpolyole erhalten werden können.

In einer bevorzugten Ausführungsform des erfindungsgemäßen Verfahrens beträgt der in den Schritten (i) bis (v) eingebrachte Mischleistungseintrag zwischen 0,8 und 5 W/l, besonders bevorzugt zwischen 0,8 und 3 W/l, bezogen auf das Flüssigkeitsvolumen nach Beendigung von Schritt (v), d.h. nach Abschluss der Dosierung aller Edukte.

Generell sollte in allen Reaktions- und / oder Mischphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischleistung, die, bezogen auf das Flüssigkeitsvolumen nach Beendigung von Schritt (v), also bezogen auf den Füllstand am Ende der Dosierung aller Edukte, im Bereich von 0,8 bis 5 W / 1, bevorzugt im Bereich von 0,8 und 3 W / I liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende von Dosier- und Nachreaktionsphasen beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung und den erforderlichen Mischleistungseintrag ausschließlich über einen über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,8 bis 5 W / 1, bevorzugt 0,8 bis 3 W / l wobei diese auf das im Reaktor und den Umpumpkreislauf nach Abschluss der Dosierung aller Edukte befindliche Flüssigkeitsvolumen, also den Füllstand nach Beendigung von Schritt (v) bezogen ist.

Es wird empfohlen, nicht nur die Herstellung der erfindungsgemäßen Polyoxyalkylenpolyesterpolyole unter Sauerstoffausschluss durchzuführen, sondern auch die entsprechenden Fertigprodukte, also fertig aufgearbeitete, ggf. salzfreie und durch Antioxidanzzugabe stabilisierte erfindungsgemäße Polyoxyalkylenpolyesterpolyole unter Sauerstoffausschluss zu handhaben und zu lagern. Hierfür geeignete Inertgase sind beispielsweise Edelgase oder Stickstoff oder Kohlendioxid, besonders geeignet sind Edelgase oder Stickstoff. Durch die Unterbindung von Sauerstoffzutritt lassen sich weitere Produktverfärbungen weitestgehend vermeiden, dies gilt insbesondere bei erhöhten Temperaturen, die im Allgemeinen genutzt werden um durch Senkung der Produktviskosität die Handhabung der Fertigprodukte zu erleichtern. Darüber hinaus entstehen unter Inertgasatmosphäre auch deutlich weniger Peroxidgruppen, die unter Spaltung vorhandener Polyetherbindungen zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können während der Lagerung der Fertigprodukte Qualitätsminderungen minimiert, der Gehalt an leichtflüchtigen organischen Verbindungen gesenkt und Geruchsbelästigungen sowie gesundheitliche Beeinträchtigungen vermieden werden.

Ein weiterer Gegenstand der Erfindung sind Polyoxyalkylenpolyesterpolyole erhältlich nach dem erfindungsgemäßen Verfahren.

Erfindungsgemäß weist das resultierende Polyoxyalkylenpolyesterpolyol eine berechnete OH-Zahl von 320 mg(KOH)/g bis 530 mg(KOH)/g bevorzugt von 350 mg(KOH)/g bis 500 mg(KOH)/g auf.

Die zahlenmittlere OH-Funktionalität $F_n$ der nach dem erfindungsgemäßen Verfahren erhältlichen Polyoxyalkylenpolyesterpolyole beträgt bevorzugt mindestens 2,4 besonders bevorzugt 2,4bis 4,8, wobei die zahlenmittlere Funktionalität $F_n$ gemäß folgender Formel (1) berechnet wird,

$$F_n = \frac{\sum_i n_i \times F_i + \sum_j n_j \times F_j + \sum_f n_f \times F_f}{\sum_i n_i + \sum_j n_j + \sum_f n_f} \qquad (1)$$

worin $F_i$ die H-Funktionalität der hydroxyfunktionellen Starterverbindung i und $n_i$ die eingesetzte Molzahl an hydroxyfunktioneller Starterverbindung i, $n_j$ die eingesetzte Molzahl an aminfunktioneller Starterverbindung j und $F_j$ die pro Molekül der aminischen Starterverbindung eingebrachte Zahl aminischer Protonen sowie $n_f$ die eingesetzte Molzahl an Fettsäureester f und $F_f$ die Hydroxyfunktionalität des Fettsäureesters f bedeuten. Beispielsweise trägt Sojaöl keine Fettsäurereste mit OH-Gruppen, somit ist $f_{Sojaöl} = 0$. Ricinusöl hingegen besitzt eine OH-Funktionalität von im Mittel 2,7, somit ist $f_{Ricinusöl} = 2,7$.

In einer Ausführungsform weist das resultierende Polyoxyalkylenpolyesterpolyol eine gemäß der Methode 180.1 der US-Umweltschutzbehörde USEPA (United States Environmental Protection Agency) bestimmte Trübungszahl (Trübungswert) von ≤ 30 NTUs bevorzugt von ≤ 20 NTUs auf. Die Maßeinheit ist NTU (nephelometric turbidity unit).

Ein weiterer Gegenstand der vorliegenden Erfindung ist ein Verfahren zur Herstellung von Polyurethanen durch Umsetzung des erfindungsgemäß hergestellten Polyoxyalkylenpolyesterpolyols mit einem Polyisocyanat. Die Polyoxyalkylenpolyesterpolyole können als Ausgangskomponenten für die Herstellung von massiven oder geschäumten Polyurethanwerkstoffen, wie beispielsweise von Beschichtungen oder Hartschaumstoffen zu Isolierzwecken, eingesetzt werden. Solche Polyurethanwerkstoffe können auch Isocyanurat-, Allophanat- und Biuretstruktureinheiten enthalten.

Zur Herstellung der geschäumten oder massiven Polyurethanwerkstoffe werden die erfindungsgemäßen Polyoxyalkylenpolyesterpolyole gegebenenfalls mit weiteren isocyanatreaktiven Komponenten gemischt und mit organischen Polyisocyanaten, gegebenenfalls in Gegenwart von Treibmitteln, in Gegenwart von Katalysatoren und gegebenenfalls in Gegenwart anderer Zusatzstoffe, wie z. B. Zellstabilisatoren, zur Reaktion gebracht.

Als weitere isocyanatreaktive Komponenten können den erfindungsgemäßen Polyoxyalkylenpolyesterpolyolen gegebenenfalls Polyetherpolyole, Polyesterpolyole, Polycarbonatpolyole, Polyethercarbonatpolyole, Polyestercarbonatpolyole, Polyetherestercarbonatpolyole und/oder niedermolekulare Kettenverlängerungs- und/oder Vernetzungsmittel mit OH-Zahlen bzw. NH-Zahlen von 6 bis 1870 mg KOH/g beigemischt werden.

Hierfür geeignete Polyetherpolyole können beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 zerewitinoff-aktive Wasserstoffatome gebunden enthält, oder durch kationische Polymerisation von Alkylenoxiden in Gegenwart von Lewis-Säuren wie Antimonpentachlorid, Bortrifluorid-Etherat oder Tris(pentafluorophenyl)boran erhalten werden. Geeignete Katalysatoren sind natürlich auch solche vom Doppelmetallcyanidkomplextyp, sog. DMC-Katalysatoren, wie sie beispielsweise in US-A 3 404 109, US-A 3 829 505, US-A 3 941 849, US-A 5 158 922, US-A 5 470 813, EP-A 700 949, EP-A 743 093, EP-A 761 708, WO 97/40086, WO 98/16310 und WO 00/47649 beschrieben sind. Geeignete Alkylenoxide sowie einige geeignete Starterverbindungen sind in vorangegangenen Abschnitten bereits beschrieben worden. Ergänzend zu erwähnen sind Tetrahydrofuran als lewis-sauer polymerisierbarer cyclischer Ether und Wasser als Startermolekül. Die Polyetherpolyole, vorzugsweise Polyoxypropylen-polyoxyethylen-polyole, besitzen vorzugsweise zahlenmittlere Molmassen von 200 bis 8000 Da. Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch *in situ* Polymerisation von Acrylnitril, Styrol oder vorzugsweise Mischungen aus Styrol und Acrylnitril, z.B. im Massenverhältnis 90:10 bis 10:90, vorzugsweise 70:30 bis 30:70, zweckmäßigerweise in den vorgenannten Polyetherpolyolen hergestellt werden, sowie Polyetherpolyol-Dispersionen, die als disperse Phase, üblicherweise in einer Menge von 1 bis 50 Massen-%, vorzugsweise 2 bis 25 Massen-%, anorganische Füllstoffe, Polyharnstoffe, Polyhydrazide, tert.-Aminogruppen gebunden enthaltende Polyurethane und/oder Melamin enthalten.

Geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäure-mono und/oder -diester von Alkoholen mit 1 bis 4 Kohlenstoffatomen oder Dicarbonsäureanhydride, eingesetzt werden. Vorzugsweise verwendet werden Dicarbonsäuregemische aus Bernstein-, Glutar- und Adipinsäure in Mengenverhältnissen von beispielsweise 20 bis 35 / 40 bis 60 / 20 bis 36 Massen-Teilen und insbesondere Adipinsäure. Beispiele für zwei- und mehrwertige Alkohole sind Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten mehrwertigen Alkohole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung der Polyesterpolyole können die organischen, aromatischen oder aliphatischen Polycarbonsäuren und/oder Polycarbonsäurederivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium oder Argon und auch in der Schmelze bei Temperaturen von 150 bis 300 °C, vorzugsweise 180 bis 230 °C gegebenenfalls unter vermindertem Druck bis zu den gewünschten Säure- und OH-Zahlen, polykondensiert werden. Die Säurezahl solcher Polyesterpolyole ist vorteilhafterweise kleiner als 10, vorzugsweise kleiner als 2,5 mg KOH / g.

Nach einem bevorzugten Herstellverfahren wird das Veresterungsgemisch bei den oben genannten Temperaturen bis zu einer Säurezahl von 80 bis 30 mg KOH / g, vorzugsweise 40 bis 30 mg KOH / g, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Geeignete Polycarbonatpolyole sind solche der an sich bekannten Art, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z. B. Diphenylcarbonat, Dimethylcarbonat sowie $\alpha$-$\omega$-Bischloroformiaten oder Phosgen hergestellt werden können. Die ebenfalls geeigneten Polyethercarbonatpolyole werden durch Copolymerisation cyclischer Epoxide und Kohlendioxid erhalten, vorzugsweise werden solche Copolymerisationen unter hohem Druck durchgeführt und durch DMC-Verbindungen katalysiert.

Niedermolekulare difunktionelle Kettenverlängerungsmittel und/oder niedermolekulare, vorzugsweise tri- oder tetrafunktionelle Vernetzungsmittel können den erfindungsgemäß einzusetzenden Polyoxyalkylenpolyesterpolyolen zur Modifizierung der mechanischen Eigenschaften, insbesondere der Härte der PUR-Werkstoffe beigemischt werden. Geeignete Kettenverlängerungsmittel wie Alkandiole, Dialkylenglykole und Polyalkylenpolyole und Vernetzungsmittel, z.B. 3- oder 4-wertige Alkohole und oligomere Polyalkylen-polyole mit einer Funktionalität von 3 bis 4, besitzen üblicherweise Molmassen < 800, vorzugsweise von 18 bis 400 und insbesondere von 60 bis 300 Da. Als Kettenverlängerungsmittel vorzugsweise verwendet werden Alkandiole mit 2 bis 12 Kohlenstoffatomen, z.B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z. B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z. B. 1,2-Propandiol, 2-Methyl-1,3-Propandiol, 3-Methyl-1,5-pentandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykolester oder Terephthalsäure-bis-1,4-butylenglykolester und Hydroxyalkylenether des Hydrochinons oder Resorcins, z.B. 1,4-Di-($\beta$-hydroxyethyl)-hydrochinon oder 1,3-($\beta$-Hydroxyethyl)-resorcin. Auch können Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo) aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Disec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.butyl-, N,N'-Dicyclohexyl-4,4'-diamino-diphenylmethan, N,N'-Di-sec.-butylben-zidin, Methylen-bis(4-amino-3-benzoesäuremethylester), 2,4-Chlor-4,4'-diamino-diphenylmethan, 2,4- und 2,6-Toluylendiamin verwendet werden. Geeignete Vernetzungsmittel sind beispielsweise Glycerin, Trimethylolpropan oder Pentaerythrit.

Verwendbar sind auch Gemische unterschiedlicher Kettenverlängerungs- und Vernetzungsmittel untereinander sowie Gemische aus Kettenverlängerungs- und Vernetzungsmitteln.

Geeignete organische Polyisocyanate sind cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel Q(NCO)$_n$ in der n = 2-4, vorzugsweise 2, und Q einen aliphatischen Kohlenwasserstoffrest mit 2-18, vorzugsweise 5-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten. Geeignet sind z.B.

Ethylendiisocyanat, 1,4-Tetramethylendiisocyanat, 1,5 Pentamethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat (DE-A 196 27 907), 1,4-Duroldiisocyanat (DDI), 4,4'-Stilbendiisocyanat (DE-A 196 28 145), 3,3'-Dimethyl-4,4'-biphenylendiisocyanat (DIBDI) (DE-A 195 09 819) 2,4- und 2,6-Toluylendiisocyanat (TDI) sowie beliebige Gemische dieser Isomeren, Diphenylmethan-2,4'-diisocyanat und/oder Diphenylmethan-4,4'-diisocyanat (MDI) oder Naphthylen-1,5-diisocyanat (NDI).

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB-A 848 671 beschrieben werden, m- und p-Isocyanatophenylsulfonylisocyanate gemäß US-A 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, 25 37 685 und 25 52 350 beschrieben werden, Norbornan-diisocyanate gemäß US-A 3 492 301, Allophanatgruppen aufweisende Polyisocyanate, wie sie in GB-A 994 890, der BE-B 761 626 und NL-A 7 102 524 beschrieben werden, Isocyanuratgruppen aufweisende Polyisocyanate, wie sie in US-A 3 001 9731, in DE-C 10 22 789, 12 22 067 und 1 027 394 sowie in DE-A 1 929 034 und 2 004 048 beschrieben werden, Urethangruppen aufweisende Polyisocyanate, wie sie z.B. in der BE-B 752 261 oder in US-A 3 394 164 und 3 644 457 beschrieben werden, acylierte Harnstoffgruppen aufweisende Polyisocyanate gemäß DE-C 1 230 778, Biuretgruppen aufweisende Polyisocyanate, wie sie in US-A 3 124 605, 3 201 372 und 3 124 605 sowie in GB-B 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-B 965 474 und 1 072 956, in US-A 3 567 763 und in DE-C 12 31 688 genannt werden, Umsetzungsprodukte der obengenannten Isocyanate mit Acetalen gemäß DE-C 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("Roh-MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Es können auch Isocyanatgruppen aufweisende Prepolymere verwendet werden, die erhältlich sind durch Umsetzung einer Teil- oder der Gesamtmenge der erfindungsgemäß einzusetzenden Polyoxyalkylenpolyesterpolyole und / oder einer Teil- oder der Gesamtmenge der den erfindungsgemäß einzusetzenden Polyoxyalkylenpolyesterpolyolen ggf. beizumischenden, oben beschriebenen isocyanatreaktiven Komponenten mit mindestens einem aromatischen Di- oder Polyisocyanat aus der Gruppe TDI, MDI, DIBDI, NDI, DDI, vorzugsweise mit 4,4'-MDI und/oder 2,4-TDI und/oder 1,5-NDI zu einem Urethangruppen, vorzugsweise Urethangruppen und Isocyanatgruppen aufweisenden Polyadditionsprodukt. Solche Polyadditionsprodukte weisen NCO-Gehalte von 20,0 bis 40,0 Massen-% auf. Nach einer bevorzugt angewandten Ausführungsform werden die Isocyanatgruppen enthaltenden Prepolymere hergestellt durch Umsetzung von ausschließlich höhermolekularen Polyhydroxylverbindungen, also den erfindungsgemäß einzusetzenden Polyoxyalkylenpolyesterpolyolen und/oder Polyetherpolyolen, Polyesterpolyolen oder Polycarbonatpolyolen mit den Polyisocyanaten, vorzugsweise 4,4'-MDI und/ oder 2,4-TDI.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung zur Herstellung der PUR-Werkstoffe zuzufügen.

Als zum Zwecke der Schaumstoffherstellung gegebenenfalls einzusetzendes Treibmittel kann Wasser verwendet werden, das mit den organischen Polyisocyanaten oder mit den Isocyanatgruppen aufweisenden Prepolymeren *in situ* unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Wird, um die gewünschte Dichte einzustellen, der Polyurethanformulierung Wasser zugegeben, wird dieses üblicherweise in Mengen von 0,001 bis 6,0 Massen-%, bezogen auf die Masse der eingesetzten erfindungsgemäßen Polyoxyalkylenpolyesterpolyole, gegebenenfalls weiterer isocyanatreaktiver Komponenten, der Katalysatoren und weiterer Zusatzstoffe verwendet.

Als Treibmittel können anstelle von Wasser oder vorzugsweise in Kombination mit Wasser auch Gase oder leicht flüchtige anorganische oder organische Substanzen, die unter dem Einfluß der exothermen Polyadditionsreaktion verdampfen und vorteilhafterweise einen Siedepunkt unter Normaldruck im Bereich von -40 bis 120 °C, vorzugsweise von 10 bis 90 °C besitzen, als physikalische Treibmittel eingesetzt werden. Als organische Treibmittel können z.B. Aceton, Ethylacetat, Methylacetat, halogensubstituierte Alkane wie Methylenchlorid, Chloroform, Ethylidenchlorid, Vinylidenchlorid, Monofluortrichlormethan, Chlordifluormethan, Dichlordifluormethan, HFKWs wie R 134a, R 245fa und R 365mfc, teilfluorierte Olefine ("Hydrofluoroolefine", HFOs), ferner unsubstituierte Alkane wie Butan, n-Pentan, Isopentan, Cyclopentan, Hexan, Heptan oder Diethylether verwendet werden. Als anorganische Treibmittel kommen z.B. Luft, $CO_2$ oder $N_2O$ in Frage. Eine Treibwirkung kann auch erzielt werden durch Zusatz von Verbindungen, die sich bei Temperaturen oberhalb Raumtemperatur unter Abspaltung von Gasen, beispielsweise von Stickstoff und/oder Kohlendioxid, zersetzen, wie Azoverbindungen, z.B. Azodicarbonamid oder Azoisobuttersäurenitril oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure. Weitere Beispiele für Treibmittel, Einzelheiten über die Verwendung von Treibmitteln und Kriterien für die Treibmittelwahl sind in R. Vieweg, A. Höchtlen (Hrsg.): "Kunststoff-Handbuch", Band VII, Carl-Hanser-Verlag, München 1966, S. 108f, 453ff und 507-5 10 sowie in D. Randall, S. Lee (Hrsg.): "The Polyurethanes Book", John Wiley & Sons, Ltd., London 2002, S. 127 - 136, S 232 - 233 und S. 261 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen, eingesetzt werden können, hängt ab von der angestrebten PUR-Werkstoffdichte und der eingesetzten Wassermenge. Die erforderlichen Mengen können experimentell leicht ermittelt werden.

In Abwesenheit von Feuchtigkeit und physikalisch oder chemisch wirkenden Treibmitteln können natürlich auch kompakte PUR-Werkstoffe hergestellt werden.

Dem Fachmann geläufige und für die Polyurethanwerkstoffherstellung bewährte Aminkatalysatoren sind z. B. tertiäre Amine wie Triethylamin, Tributylamin, N-Methylmorpholin, N-Ethyl-morpholin, N,N,N',N'-Tetramethyl-ethylendiamin, Pentamethyldiethylen-triamin und höhere Homologe (DE-OS 26 24 527 und 26 24 528), 1,4-Diaza-bicyclo-(2,2,2)-octan, N-Methyl-N'-dimethylaminoethyl-piperazin, Bis-(dimethylaminoal-kyl)-piperazine (DE-A 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-bu-tandiamin, N,N-Dimethyl-$\beta$-phenyl-ethyl-amin, Bis-(dimethylaminopropyl)-harnstoff, 1,2-Dimethylimidazol, 2-Methylimidazol, monocyclische und bicyclische Amidine (DE-A 17 20 633), Bis-(dialkylamino)-alkylether (US-A 3 330 782, DE-B 10 30 558, DE-A 18 04 361 und 26 18 280) sowie Amidgruppen (vorzugsweise Formamidgruppen) aufweisende tertiäre Amine gemäß DE-A 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen, wie Aceton, Methylethylketon oder Cyclohexanon und Phenolen, wie Phenol oder alkylsubstituierten Phenolen, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet.

Werden für die Katalyse der Polyurethanreaktion Amine als Katalysatoren eingesetzt, so ist natürlich zu beachten, dass ggf. unter Amin-Katalyse hergestellte erfindungsgemäße Polyoxyalkylenpolyesterpolyole bereits katalytisch aktive Amine enthalten können. Durch geeignete Versuchsreihen ist es dem Fachmann jedoch leicht möglich, die Mengen zweckmäßigerweise noch zuzusetzender Aminkatalysatoren zu ermitteln.

Des Weiteren können als Katalysatoren für diesen Zweck übliche organische Metallverbindungen eingesetzt werden, vorzugsweise organische Zinnverbindungen wie Zinn-(II)-Salze von organischen Carbonsäuren, z. B. Zinn-(II)-acetat, Zinn-(II)-octoat, Zinn-(II)-ethylhexoat und Zinn-(II)-Taurat und die Dialkylzinn-(IV)-salze von Mineralsäuren oder organischen Carbonsäuren, z. B. Dibutylzinndiacetat, Dibutylzinndilaurat, Dibutylzinnmaleat, Dioctylzinndiacetat und Dibutylzinndichlorid. Daneben können auch schwefelhaltige Verbindungen wie Di-n-octyl-zinn-mercaptid (US-A 3 645 927) Verwendung finden.

Katalysatoren, welche die Trimerisierung von NCO-Gruppen in besonderer Weise katalysieren, werden zur Herstellung von Polyurethanwerkstoffen mit hohen Anteilen an so genannten Poly(isocyanurat)strukturen ("PIR-Schaumstoffe") eingesetzt. Üblicherweise kommen für die Herstellung solcher Materialien Rezepturen mit signifikanten Überschüssen von NCO-Gruppen gegenüber OH-Gruppen zur Anwendung. PIR-Schaumstoffe werden üblicherweise bei Kennzahlen von 180 bis 450 hergestellt, wobei die Kennzahl als das mit dem Faktor 100 multiplizierte molare Verhältnis von Isocyanatgruppen zu Hydroxygruppen definiert ist. Katalysatoren, die zur Ausprägung von Isocyanuratstrukturen beitragen, sind Metallsalze wie beispielsweise Kalium-oder Natriumacetat, Natriumoctoat und Aminoverbindungen wie 1,3,5-Tris(3-dimethylaminopropyl)hexahydrotriazin.

Die Katalysatoren bzw. Katalysatorkombinationen werden in der Regel in einer Menge zwischen etwa 0,001 und 10 Massen-%, insbesondere 0,01 bis 4 Massen-%, bezogen auf die Gesamtmenge an Verbindungen mit mindestens zwei gegenüber Isocyanaten reaktionsfähigen Wasserstoffatomen, eingesetzt.

Bei der Herstellung der kompakten oder geschäumten PUR-Werkstoffe können gegebenenfalls Zusatzstoffe mitverwendet werden. Genannt seien beispielsweise oberflächenaktive Zusatzstoffe wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane in Frage. Diese Verbindungen sind im Allgemeinen so aufgebaut, dass Copolymerisate aus Ethylenoxid und Propylenoxid mit einem Polydimethylsiloxanrest verbunden sind. Derartige Schaumstabilisatoren können gegenüber Isocyanaten reaktiv sein oder durch Veretherung der endständigen OH-Gruppen gegenüber Isocyanaten unreaktiv sein. Sie sind z. B. in US-A 2 834 748, 2 917 480 und 3 629 308 beschrieben. Allgemeine Strukturen solcher Schaumstabilisatoren sind in G. Oertel (Hrsg.): "Kunststoff-Handbuch", Band VII, Carl-Hanser-Verlag, München, Wien 1993, S. 113 - 115 wiedergegeben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole und Paraffinöle, und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Massen-Teilen, bezogen auf 100 Massen-Teile der Gesamtmenge an Verbindungen mit gegenüber Isocyanaten reaktionsfähigen Wasserstoffatomen, angewandt. Zugesetzt werden können auch Reaktionsverzögerer, z.B. sauer reagierende Stoffe wie Salzsäure, oder organische Säuren und Säurehalogenide sowie Pigmente oder Farbstoffe und an sich bekannte Flammschutzmittel, z.B. Tris-(chlorethyl)phosphat, Triethylphosphat, Trikresylphosphat oder Ammoniumphosphat und -polyphosphat, ferner Stabilisatoren gegen Alterungs- und Witterungseinflüsse, Weichmacher und fungizid und bakterizid wirkende Substanzen. Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Die PUR-Werkstoffe können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden.

### Beispiele für die Herstellung der erfindungsgemäßen Polyoxyalkylenpolyesterpolyole

### Eingesetzte Rohstoffe:

### Sojaöl:

Sojaöl (raffiniert, d. h. entlecithiniert, neutralisiert, entfärbt und dampfgestrippt), bezogen von der Sigma-Aldrich Chemie GmbH, München.

### Irganox® 1076:

Octadecyl-3-(3,5-di-tert.butyl-4-hydroxyphenyl)propionat

Prozentangaben sind, sofern nicht anders angegeben, als Angaben in Massenprozent zu verstehen.

### Methoden:

### OH-Zahl-Bestimmung

Die Bestimmung der OH-Zahlen erfolgte gemäß der Vorschrift der DIN 53240.

### Bestimmung der Viskosität

Die Bestimmung der Viskositäten erfolgte nach der Vorschrift der DIN 53019 mittels Stabinger-Viskosimeter (Stabinger SVM 3000, Hersteller: Anton Paar)

**Bestimmung der Trübung**

Die Bestimmung der Trübungswerte erfolgte gemäß der Methode 180.1 der US-Umweltschutzbehörde USEPA (United States Environmental Protection Agency). Die Maßeinheit ist NTU (nephelometric turbidity unit).

**Beispiel 1 (erfinderisch)**

In einen 10 1 Laborautoklaven wurden unter Stickstoffatmosphäre 835,5 g einer 70 %igen Lösung von Sorbit in Wasser, 1099,0 g Saccharose, 153,4 g destilliertes Wasser und 10,58 g Imidazol gegeben. Nach Verschließen des Autoklaven wurde aus ihm Restsauerstoff bei laufendem Rührer (200 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren (200 U / min, Gitterrührer) auf 110 °C aufgeheizt. Nach Erreichen dieser Temperatur wurde die Rührerdrehzahl auf 450 U / min (entsprechend einem Leistungseintrag von ca. 4,6 W / 1, bezogen auf den Füllstand am Ende der Dosierung aller Edukte), erhöht. Es wurden bei dieser Temperatur zunächst 1179,3 g Propylenoxid über einen Zeitraum von insgesamt 9,2 h eindosiert. Nach beendeter Dosierung dieses ersten Propylenoxidblocks schloss sich eine Nachreaktionszeit von 4 h an. Danach wurde der Inhalt des Autoklaven über einen Zeitraum von 3,5 h bei 110 °C unter Rühren mit 100 U/min. im Vakuum bei einem Druck von ca. 125 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 30 °C abgekühlt und es wurden 3138,0 g Sojaöl hinzugegeben. Nach Verschließen des Autoklaven wurde Restsauerstoff aus ihm während der Aufheizphase durch 2-maliges Beaufschlagen mit Stickstoff bis zu einem Absolutdruck von 5 bar und anschließendes Evakuieren auf 10 mbar entfernt. Nach Wiedererreichen der Reaktionstemperatur von 110 °C und Einstellen der Rührerdrehzahl auf 450 U / min wurden 300 g Propylenoxid über einen Zeitraum von 9,72 h eindosiert. Nach beendeter Dosierung dieses zweiten Propylenoxidblocks schloss sich eine Nachreaktionszeit von 3 h Dauer an. Schließlich wurde der Inhalt des Autoklaven bei Reaktionstemperatur über einen Zeitraum von 30 min. im Vakuum bei ca. 5 mbar ausgeheizt. Während der Abkühlphase wurden 2,534 g IRGANOX® 1076 zugegeben. Man erhielt ein bei Raumtemperatur klares Produkt mit einer gemessenen OH-Zahl von 385 mg KOH / g und einer Viskosität bei 25 °C von 17550 mPas. Der Trübungswert betrug 4,1 NTUs

**Beispiel 2 (Vergleich)**

In einen 10 1 Laborautoklaven wurden unter Stickstoffatmosphäre 835,4 g einer 70 %igen Lösung von Sorbit in Wasser, 1099,2 g Saccharose, 154,1 g destilliertes Wasser und 10,55 g Imidazol gegeben. Nach Verschließen des Autoklaven wurde aus ihm Restsauerstoff bei laufendem Rührer (200 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren auf 110 °C aufgeheizt. Nach Erreichen dieser Temperatur wurde die Rührerdrehzahl auf 450 U / min (entsprechend einem Leistungseintrag von ca. 4,6 W / 1, bezogen auf den Füllstand am Ende der Dosierung aller Edukte) erhöht. Es wurden bei dieser Temperatur zunächst 1179,3 g Propylenoxid über einen Zeitraum von insgesamt 2,7 h eindosiert. Nach beendeter Dosierung dieses ersten Propylenoxidblocks schloss sich eine Nachreaktionszeit von 1,33 h an. Danach wurde der Inhalt des Autoklaven über einen Zeitraum von 3,5 h bei 110 °C unter Rühren mit 100 U/min. im Vakuum bei einem Druck von ca. 125 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 30 °C abgekühlt und es wurden 3140,6 g Sojaöl hinzugegeben. Nach Verschließen des Reaktors wurde Restsauerstoff während der Aufheizphase durch 2-maliges Beaufschlagen des Autoklaven mit Stickstoff bis zu einem Absolutdruck von 5 bar und anschließendes Evakuieren auf 10 mbar entfernt. Nach Wiedererreichen der Reaktionstemperqatur von 110 °C und Einstellen der Rührerdrehzahl auf 450 U / min wurden 300 g Propylenoxid über einen Zeitraum von 1,22 h eindosiert. Nach beendeter Dosierung dieses zweiten Propylenoxidblocks schloss sich eine Nachreaktionszeit von 3 h Dauer an. Schließlich wurde der Inhalt des Autoklaven bei Reaktionstemperatur über einen Zeitraum von 30 min. im Vakuum bei ca. 5 mbar ausgeheizt. Während der Abkühlphase wurden 2,496 g IRGANOX® 1076 zugegeben. Man erhielt ein zweiphasiges Produkt, an dem sich keine analytischen Daten ermitteln ließen.

**Beispiel 3 (Vergleich)**

In einen 10 1 Laborautoklaven wurden unter Stickstoffatmosphäre 835,2 g einer 70 %igen Lösung von Sorbit in Wasser, 1199,0 g Saccharose, 150,4 g destilliertes Wasser und 10,48 g Imidazol gegeben. Nach Verschließen des Autoklaven wurde aus ihm Restsauerstoff bei laufendem Rührer (200 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren (200 U / min, Gitterrührer) auf 110 °C aufgeheizt. Nach Erreichen dieser Temperatur wurde die Rührerdrehzahl auf 450 U / min (entsprechend einem Leistungseintrag von ca. 4,6 W / 1, bezogen auf den Füllstand am Ende der Dosierung aller Edukte) erhöht. Es wurden bei dieser Temperatur zunächst 1000,0 g Propylenoxid über einen Zeitraum von insgesamt 10,02 h eindosiert. Nach beendeter Dosierung dieses ersten Propylenoxidblocks schloss sich eine Nachreaktionszeit von 2,5 h an. Danach wurde der Inhalt des Autoklaven über einen Zeitraum von 3,1 h bei 110 °C unter Rühren mit 200 U/min. im Vakuum bei einem Druck von ca. 110 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 30 °C abgekühlt und es wurden 3138,1 g Sojaöl hinzugegeben. Nach Verschließen des Autoklaven wurde Restsauerstoff aus ihm während der Aufheizphase durch 2-maliges Beaufschlagen mit Stickstoff bis zu einem Absolutdruck von 5 bar und anschließendes Evakuieren auf 10 mbar entfernt. Nach Wiedererreichen der Reaktionstemperatur von 110 °C und Einstellen der Rührerdrehzahl auf 450 U / min wurden 479,2 g Propylenoxid über einen Zeitraum von 10,23 h eindosiert. Nach beendeter Dosierung dieses zweiten Propylenoxidblocks schloss sich eine Nachreaktionszeit von 2,18 h Dauer an. Schließlich wurde der Inhalt des Autoklaven bei Reaktionstemperatur über einen Zeitraum von 30 min. im Vakuum bei ca. 4 mbar ausgeheizt. Während der Abkühlphase wurden 2,490 g IRGANOX® 1076 zugegeben. Man erhielt ein bei Raumtemperatur trübes Produkt mit einer gemessenen OH-Zahl von 398 mg KOH / g und einer Viskosität bei 25 °C von 24150 mPas. Der Trübungswert betrug 35,30 NTUs.

**Beispiel 4 (Vergleich)**

In einen 10 1 Laborautoklaven wurden unter Stickstoffatmosphäre 835,4 g einer 70 %igen Lösung von Sorbit in Wasser, 1098,0 g Saccharose, 150,0 g destilliertes Wasser und 10,52 g Imidazol gegeben. Nach Verschließen des Autoklaven wurde aus ihm Restsauerstoff bei laufendem Rührer (200 U / min, Gitterrührer) durch 5-maliges Beaufschlagen mit Stickstoff bis zu einem Absolutdruck von 5 bar und anschließendes Evakuieren auf 10 - 20 mbar entfernt. Sodann wurde der Reaktor unter Rühren (200 U / min, Gitterrührer) auf 110 °C aufgeheizt. Nach Erreichen dieser Temperatur wurde die Rührerdrehzahl auf 450 U / min (entsprechend einem Leistungseintrag von ca. 4,6 W / 1, bezogen auf den Füllstand am Ende der Dosierung aller Edukte) erhöht. Es wurden bei dieser Temperatur zunächst 1000,0 g Propylenoxid über einen Zeitraum von insgesamt 10,2 h eindosiert. Nach beendeter Dosierung dieses ersten Propylenoxidblocks schloss sich eine Nachreaktionszeit von 1,8 h an. Danach wurde der Inhalt des Autoklaven über einen Zeitraum von 3,1 h bei 110 °C unter Rühren mit 250 U/min. im Vakuum bei einem Druck von ca. 125 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 40 °C abgekühlt und es wurden 3138,0 g Sojaöl hinzugegeben. Nach Verschließen des Autoklaven wurde Restsauerstoff aus ihm während der Aufheizphase durch 5-maliges Beaufschlagen mit Stickstoff bis zu einem Absolutdruck von 4 bar und anschließendes Entspannen auf Atmosphärendruck entfernt. Nach Wiedererreichen der Reaktionstemperatur von 110 °C und Einstellen der Rührerdrehzahl auf 450 U / min wurde auf 90 mbar evakuiert und es wurden 479,2 g Propylenoxid über einen Zeitraum von 8,2 h eindosiert. Nach beendeter Dosierung dieses zweiten Propylenoxidblocks schloss sich eine Nachreaktionszeit von 1,4 h Dauer an. Schließlich wurde der Inhalt des Autoklaven bei Reaktionstemperatur über einen Zeitraum von 40 min. im Vakuum bei ca. 30 mbar ausgeheizt. Während der Abkühlphase wurden 2,526 g IRGANOX® 1076 zugegeben. Man erhielt ein bei Raumtemperatur zweiphasiges Produkt, an dem sich keine analytischen Daten ermitteln ließen.

**Beispiel 5 (Vergleich)**

In einen 10 1 Laborautoklaven wurden unter Stickstoffatmosphäre 835,3 g einer 70 %igen Lösung von Sorbit in Wasser, 1098,5 g Saccharose, 150,0 g destilliertes Wasser und 10,50 g Imidazol gegeben. Nach Verschließen des Autoklaven wurde aus ihm Restsauerstoff bei laufendem Rührer (100 U / min, Gitterrührer) durch 5-maliges Beaufschlagen mit Stickstoff bis zu einem Absolutdruck von 5 bar und anschließendes Evakuieren auf 200 mbar entfernt. Sodann wurde der Reaktor unter Rühren (450 U / min, Gitterrührer) auf 110 °C aufgeheizt.. Es wurden bei dieser Temperatur zunächst 1000,0 g Propylenoxid über einen Zeitraum von insgesamt 10,2 h unter Rühren mit 450 U/min (entsprechend einem Leistungseintrag von ca. 4,6 W / 1, bezogen auf den Füllstand am Ende der Dosierung aller Edukte) eindosiert. Nach beendeter Dosierung dieses ersten Propylenoxidblocks schloss sich eine Nachreaktionszeit von 2,0 h an. Danach wurde der Inhalt des Autoklaven über einen Zeitraum von 3,1 h bei 110 °C unter Rühren mit 100 U/min. im Vakuum bei einem Druck von ca. 125 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 25 °C abgekühlt und es wurden 3137,7 g Sojaöl hinzugegeben. Nach Verschließen des Autoklaven wurde Restsauerstoff aus ihm während der Aufheizphase durch 5-maliges Beaufschlagen mit Stickstoff bis zu einem Absolutdruck von 5 bar und anschließendes Entspannen auf Atmosphärendruck entfernt. Nach Wiedererreichen der Reaktionstemperatur von 110 °C und Einstellen der Rührerdrehzahl auf 450 U / min. wurden 479,3 g Propylenoxid über einen Zeitraum von 2,0 h eindosiert. Nach beendeter Dosierung dieses zweiten Propylenoxidblocks schloss sich eine Nachreaktionszeit von 4,45 h Dauer an. Schließlich wurde der Inhalt des Autoklaven bei Reaktionstemperatur über einen Zeitraum von 50 min. im Vakuum bei ca. 30 mbar ausgeheizt. Während der Abkühlphase wurden 2,526 g IRGANOX® 1076 zugegeben. Man erhielt ein bei Raumtemperatur zweiphasiges Produkt, an dem keine analytischen Daten ermittelt wurden.

**Beispiel 6 (Vergleich)**

In einen 10 1 Laborautoklaven wurden unter Stickstoffatmosphäre 907,4 g einer 70 %igen Lösung von Sorbit in Wasser, 1193,5 g Saccharose, 163,0 g destilliertes Wasser und 11,46 g Imidazol gegeben. Nach Verschließen des Autoklaven wurde aus ihm Restsauerstoff bei laufendem Rührer (250 U / min, Gitterrührer) durch 4-maliges Beaufschlagen mit Stickstoff bis zu einem Absolutdruck von 4 bar und anschließendes Evakuieren auf 100 mbar entfernt. Sodann wurde der Reaktor unter Rühren auf 110 °C aufgeheizt. Die Rührerdrehzahl wurde auf 450 U/min (entsprechend einem Leistungseintrag von ca. 4,6 W / l, bezogen auf den Füllstand am Ende der Dosierung aller Edukte) erhöht und es wurden bei dieser Temperatur zunächst 1086,4 g Propylenoxid über einen Zeitraum von insgesamt 10,2 h eindosiert. Nach beendeter Dosierung dieses ersten Propylenoxidblocks schloss sich eine Nachreaktionszeit von 1,4 h an. Danach wurde der Inhalt des Autoklaven über einen Zeitraum von 3,1 h bei 110 °C unter Rühren mit 100 U/min. im Vakuum bei einem Druck von ca. 120 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 20 °C abgekühlt und es wurden 3409,2 g Sojaöl hinzugegeben. Nach Verschließen des Autoklaven wurde Restsauerstoff aus ihm während der Aufheizphase durch 5-maliges Beaufschlagen mit Stickstoff bis zu einem Absolutdruck von 4 bar und anschließendes Evakuieren auf 110 mbar entfernt. Nach Wiedererreichen der Reaktionstemperatur von 110 °C und Einstellen der Rührerdrehzahl auf 450 U / min. wurden 760,6 g Propylenoxid über einen Zeitraum von 2,2 h eindosiert. Nach beendeter Dosierung dieses zweiten Propylenoxidblocks schloss sich eine Nachreaktionszeit von 3,8 h Dauer an. Schließlich wurde der Inhalt des Autoklaven bei Reaktionstemperatur über einen Zeitraum von 30 min. im Vakuum bei ca. 25 mbar ausgeheizt. Während der Abkühlphase wurden 3,637 g IRGANOX® 1076 zugegeben. Man erhielt ein bei Raumtemperatur klares Produkt mit einer gemessenen OH-Zahl von 376 mg KOH / g und einer Viskosität bei 25 °C von 14150 mPas.

**Beispiel 7 (erfinderisch)**

In einen 10 1 Laborautoklaven wurden unter Stickstoffatmosphäre 836,6 g einer 70 %igen Lösung von Sorbit in Wasser, 1098,5 g Saccharose, 150,0 g destilliertes Wasser und 10,52 g Imidazol gegeben. Nach Verschließen des Autoklaven wurde aus ihm Restsauerstoff bei laufendem Rührer (100 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren (100 U / min, Gitterrührer) auf 110 °C aufgeheizt. Nach Erreichen dieser Temperatur wurde die Rührerdrehzahl auf 450 U / min (entsprechend einem Leistungseintrag von ca. 4,6 W / 1, bezogen auf den Füllstand am Ende der Dosierung aller Edukte) erhöht. Es wurden bei dieser Temperatur zunächst 1279,2 g Propylenoxid über einen Zeitraum von insgesamt 10,13 h eindosiert. Nach beendeter Dosierung dieses ersten Propylenoxidblocks schloss sich eine Nachreaktionszeit von 1,5 h an. Danach wurde der Inhalt des Autoklaven über einen Zeitraum von 3,5 h bei 110 °C unter Rühren mit 100 U/min. im Vakuum bei einem Druck von ca. 140 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 25 °C abgekühlt und es wurden 3139,0 g Sojaöl hinzugegeben. Nach Verschließen des Autoklaven wurde Restsauerstoff aus ihm durch 5-maliges Beaufschlagen mit Stickstoff bis zu einem Absolutdruck von 5 bar und anschließendes Entspannen auf Atmosphärendruck entfernt. Nach Wiedererreichen der Reaktionstemperatur von 110 °C und Einstellen der Rührerdrehzahl auf 450 U / min wurden 200,0 g Propylenoxid über einen Zeitraum von 12,07 h eindosiert. Nach beendeter Dosierung dieses zweiten Propylenoxidblocks schloss sich eine Nachreaktionszeit von 1,3 h Dauer an. Schließlich wurde der Inhalt des Autoklaven bei Reaktionstemperatur über einen Zeitraum von 30 min. im Vakuum bei ca. 30 mbar ausgeheizt. Während der Abkühlphase wurden 2,52 g IRGANOX® 1076 zugegeben. Man erhielt ein bei Raumtemperatur klares Produkt mit einer gemessenen OH-Zahl von 392 mg KOH / g und einer Viskosität bei 25 °C von 24750 mPas.

**Beispiel 8 (erfinderisch)**

In einen 10 1 Laborautoklaven wurden unter Stickstoffatmosphäre 835,2 g einer 70 %igen Lösung von Sorbit in Wasser, 1099,1 g Saccharose, 150,0 g destilliertes Wasser und 10,55 g Imidazol gegeben. Nach Verschließen des Autoklaven wurde aus ihm Restsauerstoff bei laufendem Rührer (200 U / min, Gitterrührer) durch 3-maliges Beaufschlagen mit Stickstoff bis zu einem Absolutdruck von 5 bar und anschließendes Evakuieren auf ca 110 mbar entfernt. Sodann wurde der Reaktor unter Rühren (200 U / min, Gitterrührer) auf 110 °C aufgeheizt. Nach Erreichen dieser Temperatur wurde die Rührerdrehzahl auf 350 U / min (entsprechend einem Leistungseintrag von ca. 2,1 W / l, bezogen auf den Füllstand am Ende der Dosierung aller Edukte) erhöht. Es wurden bei dieser Temperatur zunächst 1179,2 g Propylenoxid über einen Zeitraum von insgesamt 10,13 h eindosiert. Nach beendeter Dosierung dieses ersten Propylenoxidblocks schloss sich eine Nachreaktionszeit von 1,5 h an. Danach wurde der Inhalt des Autoklaven über einen Zeitraum von 2,0 h bei 110 °C unter Rühren mit 200 U/min. im Vakuum bei einem Druck von ca. 110 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 20 °C abgekühlt und es wurden 3139,2 g Sojaöl hinzugegeben. Nach Verschließen des Autoklaven wurde Restsauerstoff aus ihm während der Aufheizphase durch 4-maliges Beaufschlagen mit Stickstoff bis zu einem Absolutdruck von 3 bar und anschließendes Evakuieren auf 70 mbar entfernt. Nach Wiedererreichen der Reaktionstemperatur von 110 °C und Einstellen der Rührerdrehzahl auf 350 U / min wurden 300,0 g Propylenoxid über einen Zeitraum von 8,6 h eindosiert. Nach beendeter Dosierung dieses zweiten Propylenoxidblocks schloss sich eine Nachreaktionszeit von 2,1 h Dauer an. Schließlich wurde der Inhalt des Autoklaven bei Reaktionstemperatur über einen Zeitraum von 30 min. im Vakuum bei ca. 30 mbar ausgeheizt. Während der Abkühlphase wurden 2,535 g IRGANOX® 1076 zugegeben. Man erhielt ein bei Raumtemperatur klares Produkt mit einer gemessenen OH-Zahl von 388 mg KOH / g und einer Viskosität bei 25 °C von 24100 mPas.

**Beispiel 9 (Vergleich)**

In einen 10 1 Laborautoklaven wurden unter Stickstoffatmosphäre 835,4 g einer 70 %igen Lösung von Sorbit in Wasser, 1099,2 g Saccharose, 150,0 g destilliertes Wasser und 10,65 g Imidazol gegeben. Nach Verschließen des Autoklaven wurde aus ihm Restsauerstoff bei laufendem Rührer (100 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren (450 U / min, Gitterrührer, entsprechend einem Leistungseintrag von ca. 4,6 W / l, bezogen auf den Füllstand am Ende der Dosierung aller Edukte) auf 110 °C aufgeheizt. Es wurden bei dieser Temperatur zunächst 1179,2 g Propylenoxid über einen Zeitraum von insgesamt 9,33 h eindosiert. Nach beendeter Dosierung dieses ersten Propylenoxidblocks schloss sich eine Nachreaktionszeit von 2,5 h an. Danach wurde der Inhalt des Autoklaven über einen Zeitraum von 3,5 h bei 110 °C unter Rühren mit 100 U/min. im Vakuum bei einem Druck von ca. 150 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 40 °C abgekühlt und es wurden 3138,1 g Sojaöl hinzugegeben. Nach Verschließen des Autoklaven wurde Restsauerstoff aus ihm durch 5-maliges Beaufschlagen mit Stickstoff bis zu einem Absolutdruck von 5 bar und anschließendes Entspannen auf Atmosphärendruck entfernt. Danach wurde wiederum auf die Reaktionstemperatur von 110 °C aufgeheizt und die Rührerdrehzahl auf 450 U / min erhöht. Anschließend wurden 300,1 g Propylenoxid über einen Zeitraum von 1,25 h eindosiert. Nach beendeter Dosierung dieses zweiten Propylenoxidblocks schloss sich eine Nachreaktionszeit von 6 h Dauer an. Schließlich wurde der Inhalt des Autoklaven bei Reaktionstemperatur über einen Zeitraum von 30 min. im Vakuum bei ca. 33 mbar ausgeheizt. Während der Abkühlphase wurden 2,531 g IRGANOX® 1076 zugegeben. Man erhielt ein bei Raumtemperatur zweiphasiges Produkt, an dem sich keine analytischen Daten ermitteln ließen.

**Beispiel 10 (erfinderisch)**

In einen 10 1 Laborautoklaven wurden unter Stickstoffatmosphäre 838,2 g einer 70 %igen Lösung von Sorbit in Wasser, 1098,6 g Saccharose, 150,0 g destilliertes Wasser und 10,58 g Imidazol gegeben. Nach Verschließen des Autoklaven wurde aus ihm Restsauerstoff bei laufendem Rührer (100 U / min, Gitterrührer) durch 3-maliges Beaufschlagen mit Stickstoff bis zu einem Absolutdruck von 5 bar und anschließendes Evakuieren auf ca 80 mbar entfernt. Sodann wurde der Reaktor unter Rühren (100 U / min, Gitterrührer) auf 110 °C aufgeheizt. Nach Erreichen dieser Temperatur wurde die Rührerdrehzahl auf 270 U / min (entsprechend einem Leistungseintrag von ca. 1,1 W / l, bezogen auf den Füllstand am Ende der Dosierung aller Edukte) erhöht. Es wurden bei dieser Temperatur zunächst 1179,3 g Propylenoxid über einen Zeitraum von insgesamt 10,15 h eindosiert. Nach beendeter Dosierung dieses ersten Propylenoxidblocks schloss sich eine Nachreaktionszeit von 2,1 h an. Danach wurde der Inhalt des Autoklaven über einen Zeitraum von 3,0 h bei 110 °C unter Rühren mit 200 U/min. im Vakuum bei einem Druck von ca. 125 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 45 °C abgekühlt und es wurden unter Rühren mit 100 U / min. 3137,7 g Sojaöl hinzugegeben. Nach Verschließen des Autoklaven wurde Restsauerstoff aus ihm durch 5-maliges Beaufschlagen mit Stickstoff bis zu einem Absolutdruck von 5 bar und anschließendes Entspannen auf Atmosphärendruck entfernt. Danach wurde der Autoklaveninhalt wieder auf 110 °C unter Rühren mit 100 U / min. aufgeheizt Nach Wiedererreichen der Reaktionstemperatur von 110 °C und Einstellen der Rührerdrehzahl auf 270 U / min wurden 300,0 g Propylenoxid über einen Zeitraum von 9,93 h eindosiert. Nach beendeter Dosierung dieses zweiten Propylenoxidblocks schloss sich eine Nachreaktionszeit von 1,0 h Dauer an. Schließlich wurde der Inhalt des Autoklaven bei Reaktionstemperatur über einen Zeitraum von 50 min. im Vakuum bei ca. 25 mbar ausgeheizt. Während der Abkühlphase wurden 2,533 g IRGANOX® 1076 zugegeben. Man erhielt ein bei Raumtemperatur klares Produkt mit einer gemessenen OH-Zahl von 391 mg KOH / g und einer Viskosität bei 25 °C von 24150 mPas.

**Beispiel 11 (Vergleich)**

In einen 10 1 Laborautoklaven wurden unter Stickstoffatmosphäre 835,2 g einer 70 %igen Lösung von Sorbit in Wasser, 1098,5 g Saccharose, 150,0 g destilliertes Wasser und 10,53 g Imidazol gegeben. Nach Verschließen des Autoklaven wurde aus ihm Restsauerstoff bei laufendem Rührer (100 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren auf 110 °C aufgeheizt. Während der Aufheizphase wurde die Rührerdrehzahl auf 450 U / min (entsprechend einem Leistungseintrag von ca. 4,6 W / 1, bezogen auf den Füllstand am Ende der Dosierung aller Edukte) erhöht. Unter diesen Bedingungen wurden zunächst 1070,5 g Propylenoxid über einen Zeitraum von insgesamt 10,1 h eindosiert. Nach beendeter Dosierung dieses ersten Propylenoxidblocks schloss sich eine Nachreaktionszeit von 2 h an. Danach wurde der Inhalt des Autoklaven über einen Zeitraum von 3,0 h bei 110 °C unter Rühren mit 100 U/min. im Vakuum bei einem Druck von ca. 155 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 40 °C abgekühlt und es wurden 3137,7 g Sojaöl hinzugegeben. Nach Verschließen des Autoklaven wurde Restsauerstoff aus ihm durch 5-maliges Beaufschlagen mit Stickstoff bis zu einem Absolutdruck von 5 bar und anschließendes Entspannen auf Normaldruck entfernt. Die Rührerdrehzahl wurde wieder auf 450 U / min erhöht und der Reaktorinhalt wurde auf 110 °C aufgeheizt. Unter diesen Bedingungen wurden 200,1 g Propylenoxid über einen Zeitraum von 8,13 h eindosiert. Nach beendeter Dosierung dieses zweiten Propylenoxidblocks schloss sich eine Nachreaktionszeit von 0,6 h Dauer an. Schließlich wurde der Inhalt des Autoklaven bei Reaktionstemperatur über einen Zeitraum von 90 min. im Vakuum bei ca. 32 mbar ausgeheizt. Während der Abkühlphase wurden 2,444 g IRGANOX® 1076 zugegeben. Man erhielt ein bei Raumtemperatur zweiphasiges Produkt, an dem sich keine analytischen Daten ermitteln ließen.

**Beispiel 12 (erfinderisch)**

In einen 10 1 Laborautoklaven wurden unter Stickstoffatmosphäre 835,2 g einer 70 %igen Lösung von Sorbit in Wasser, 1098,6 g Saccharose, 150,1 g destilliertes Wasser und 10,59 g Imidazol gegeben. Nach Verschließen des Autoklaven wurde aus ihm Restsauerstoff bei laufendem Rührer (100 U / min, Gitterrührer) durch 5-maliges Beaufschlagen mit Stickstoff bis zu einem Absolutdruck von 5 bar und anschließendes Entspannen auf Normaldruck entfernt. Sodann wurde der Reaktor unter Rühren auf 110 °C aufgeheizt. Während der Aufheizphase wurde die Rührerdrehzahl auf 450 U / min (entsprechend einem Leistungseintrag von ca. 4,6 W / 1, bezogen auf den Füllstand am Ende der Dosierung aller Edukte) erhöht. Unter diesen Bedingungen wurden zunächst 1279,3 g Propylenoxid über einen Zeitraum von insgesamt 10,1 h eindosiert. Nach beendeter Dosierung dieses ersten Propylenoxidblocks schloss sich eine Nachreaktionszeit von 1,5 h an. Danach wurde der Inhalt des Autoklaven über einen Zeitraum von 3,5 h bei 110 °C unter Rühren mit 100 U/min. im Vakuum bei einem Druck von ca. 135 mbar unter Einleiten von 50 ml Stickstoff pro Minute über einen unter dem Flüssigkeitsspiegel liegenden Verteilerring gestrippt und damit das Wasser entfernt. Der Autoklav wurde sodann auf 40 °C abgekühlt und es wurden 3137,8 g Sojaöl hinzugegeben. Nach Verschließen des Autoklaven wurde Restsauerstoff aus ihm durch 5-maliges Beaufschlagen mit Stickstoff bis zu einem Absolutdruck von 5 bar und anschließendes Entspannen auf Normaldruck entfernt. Die Rührerdrehzahl wurde wieder auf 450 U / min erhöht und der Reaktorinhalt wurde auf 110 °C aufgeheizt. Unter diesen Bedingungen wurden 200,0 g Propylenoxid über einen Zeitraum von 8,57 h eindosiert. Nach beendeter Dosierung dieses zweiten Propylenoxidblocks schloss sich eine Nachreaktionszeit von 2,3 h Dauer an. Schließlich wurde der Inhalt des Autoklaven bei Reaktionstemperatur über einen Zeitraum von 90 min. im Vakuum bei ca. 30 mbar ausgeheizt. Während der Abkühlphase wurden 2,444 g IRGANOX® 1076 zugegeben. Man erhielt ein bei Raumtemperatur klares Produkt mit einer gemessenen OH-Zahl von 391 mg KOH / g und einer Viskosität bei 25 °C von 22750 mPas.

Tabelle 1

| Beispiel | n(1) | n(3-1) [mol] | $t_1$ [h] | n(2) [mol] | n(3-2) [mol] | $t_2$ [h] | n(3-2)/n(2)·$t_2$ [h] | n(2)/n(3-2) [mol]/[mol] | n(3-1)/n(1) [mol]/[mol] | Anteil Fettsäureester [Massen-%] | OH-Zahl Produkt (berechnet) [mg(KOH)/g] | Aussehen |
|---|---|---|---|---|---|---|---|---|---|---|---|---|
| **1** | 44,93 | 20,3 | 9,2 | 10,7 | 5,17 | 9,7 | 4,7 | 2,07 | 0,45 | 49,7 | 399 | Klar, einphasig |
| **2 (Vgl.)** | 44,94 | 20,3 | 2,7 | 10,71 | 5,17 | 1,2 | 0,59 | 2,07 | 0,45 | 49,7 | 399 | zweiphasig |
| **3 (Vgl.)** | 44,93 | 17,22 | 10 | 10,7 | 8,25 | 10,2 | 7,89 | 1,3 | 0,38 | 48,9 | 399 | trüb |
| **4 (Vgl.)** | 44,91 | 17,22 | 10,2 | 10,7 | 8,25 | 8,2 | 6,32 | 1,3 | 0,38 | 49,7 | 399 | zweiphasig |
| **5 (Vgl.)** | 44,92 | 17,22 | 10,2 | 10,7 | 8,25 | 2 | 1,54 | 1,3 | 0,38 | 49,7 | 399 | zweiphasig |
| **6 (Vgl.)** | 48,8 | 18,71 | 10,2 | 11,62 | 13,1 | 2,2 | 2,48 | 0,89 | 0,38 | 48 | 386 | Klar, einphasig |
| **7** | 44,95 | 22,02 | 10,1 | 10,7 | 3,44 | 12,1 | 3,89 | 3,11 | 0,49 | 49,7 | 400 | Klar, einphasig |
| **8** | 44,93 | 20,3 | 10,1 | 10,7 | 5,17 | 8,6 | 4,16 | 2,07 | 0,45 | 49,7 | 399 | Klar, einphasig |
| **9 (Vgl.)** | 44,94 | 20,3 | 9,3 | 10,7 | 5,17 | 1,25 | 0,6 | 2,07 | 0,45 | 49,7 | 399 | zweiphasig |
| **10** | 44,99 | 20,3 | 10,2 | 10,7 | 5,17 | 9,93 | 4,8 | 2,07 | 0,45 | 49,7 | 400 | Klar, einphasig |
| **11 (Vgl.)** | 44,92 | 18,43 | 10,1 | 10,7 | 3,45 | 8,13 | 2,62 | 3,1 | 0,41 | 51,4 | 413 | zweiphasig |
| **12** | 44,92 | 22,03 | 10,1 | 10,7 | 3,44 | 8,57 | 2,83 | 3,11 | 0,49 | 49,7 | 399 | Klar, einphasig |
| (Vgl.): Vergleichsbeispiel | | | | | | | | | | | | |

**Patentansprüche**

1. Verfahren zur Herstellung eines Polyoxyalkylenpolyesterpolyols mit einer berechneten OH-Zahl von 320 mg KOH / g bis 530 mg KOH / g, bevorzugt von 350 mg KOH / g bis 500 mg KOH / g, durch Umsetzung

   einer H-funktionellen Starterverbindung (1) mit n(1) Mol alkoholischen Hydroxygruppen und/oder aminischen Protonen, bevorzugt mit n(1) Mol alkoholischen Hydroxygruppen, und
   eines Fettsäureesters (2) mit n(2) Mol Fettsäureestergruppen mit einem Alkylenoxid (3),
   optional in Gegenwart eines basischen Katalysators (4) und
   optional in einem Lösungsmittel (5),
   wobei die H-funktionelle Starterverbindung (1) eine oder mehrere Verbindungen umfasst,
   wobei mindestens eine H-funktionelle Starterverbindung (1) einen gemäß der Methode DIN EN ISO 11357-1:2016 bestimmten Schmelzpunkt von > 50,0 °C, bevorzugt von > 55,0 °C aufweist,
   wobei der Fettsäureester (2) eine OH-Zahl von weniger als 100 mg KOH / g aufweist,
   wobei der Anteil des Fettsäureesters (2) mindestens 40 % Massen-%, bezogen auf die Gesamtmasse aus der eingesetzten H-funktionellen Starterverbindung (1), dem eingesetzten Fettsäureester (2) und dem eingesetzten Alkylenoxid (3), beträgt,
   wobei das Verfahren folgende Schritte umfasst:
   (i) Bereitstellen eines Systems (i) umfassend die H-funktionelle Starterverbindung (1) optional den basischen Katalysator (4) optional in einem Lösungsmittel (5) in einem Reaktionsgefäß,
   (ii) Zugabe von n(3-1) Mol einer ersten Teilmenge des Alkylenoxids (3) zu dem System (i) über einen Zeitraum $t_1$ unter Bildung eines Intermediats (ii),
   (iii) Entfernung gegebenenfalls vorhandenen Lösungsmittels (5) aus dem Intermediat (ii) unter Bildung eines Intermediats (iii),
   (iv) Zugabe des Fettsäureesters (2) zum Intermediat (ii) oder zum Intermediat (iii) unter Bildung des Intermediats (iv), wobei hierbei dem Intermediat (ii) oder dem Intermediat (iii) n(2) Mol Fettsäureestergruppen zugeführt werden,
   (v) Zugabe von n(3-2) Mol einer zweiten Teilmenge des Alkylenoxids (3) zum Intermediat (iv) über einen Zeitraum $t_2$ unter Bildung des Polyoxyalkylenpolyesterpolyols,

   wobei $(n(3\text{-}2)/n(2)) \cdot t_2/[h] \geq 1,0$ ist,
   wobei $n(2)/n(3\text{-}2) \geq 1,05$ ist,
   wobei $n(3\text{-}1)/n(1) \geq 0,43$ ist.

2. Verfahren gemäß Anspruch 1, wobei die Starterverbindung (1) einen Schmelzpunkt von mehr als 65 °C, bevorzugt von 65 °C bis 265 °C und besonders bevorzugt von 80 °C bis 180 °C aufweist.

3. Verfahren gemäß Anspruch 1 oder 2, wobei die H-funktionelle Starterverbindung (1) mit dem Schmelzpunkt von > 50,0 °C, eine oder mehrere Verbindungen ist und ausgewählt wird aus der Gruppe bestehend aus Tri¬methylol¬-propan, Pentaerythrit, Sorbitol, Saccharose, Hydro¬chinon, Brenz-catechin, Resorcin, Bisphenol F, Bisphenol A, 1,3,5-Tri¬hydroxy¬benzol, 1,12-Dodecandiol, die Isomere des Diaminotoluols, die Isomere des Diaminodiphenylmethans, bevorzugt aus der Gruppe bestehend aus Pentaerythrit, Sorbitol und Saccharose.

4. Verfahrens gemäß einem der Ansprüche 1 bis 3, wobei der Fettsäureester (2) eine oder mehrere Verbindungen ist und ausgewählt wird aus der Gruppe bestehend aus Baumwollsaatöl, Erdnussöl, Kokosöl, Leinöl, Palmkernöl, Olivenöl, Maisöl, Palmöl, Jatrophaöl, Rapsöl, Sojaöl, Sonnenblumenöl, Heringsöl, Sardinenöl und Talg, bevorzugt Sojaöl.

5. Verfahrens gemäß einem der Ansprüche 1 bis 4, wobei das Alkylenoxid (3) Propylenoxid und/oder Ethylenoxid, bevorzugt Propylenoxid ist.

6. Verfahren gemäß einem der Ansprüche 1 bis 5, wobei die Umsetzung in Schritt (i) und/oder in Schritt (iv) bevorzugt in Schritt (i) in Gegenwart eines basischen Katalysators (4) erfolgt, wobei der basische Katalysator bevorzugt ein Amin, bevorzugt ein aromatisches Amin ist.

7. Verfahren gemäß Anspruch 6, wobei das Amin ein aromatisches Amin ist und das aromatische Amin eine oder mehrere Verbindungen ist und ausgewählt wird aus der Gruppe bestehend aus Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol, und N,N-dimethylaminopyridin.

8. Verfahren gemäß einem der Ansprüche 1 bis 7, wobei der Anteil des Fettsäureesters (2) von 40 Massen-% bis 60 Massen-%, bevorzugt von 42 Massen-% bis 58 Massen-%, und besonders bevorzugt von 45 Massen-% bis 55 Massen-% beträgt.

9. Verfahren gemäß einem der Ansprüche 1 bis 8, wobei $1,0 \leq (n(3\text{-}2)/n(2)) \cdot t_2/[h] \leq 10,0$, bevorzugt $1,0 \leq (n(3\text{-}2)/n(2)) \cdot t_2/[h] \leq 8,0$ ist.

10. Verfahren gemäß einem der Ansprüche 1 bis 9, wobei, $1,05 \leq n(2)/n(3\text{-}2) \leq 10,0$, bevorzugt $1,25 \leq n(2)/n(3\text{-}2) \leq 6$ ist.

11. Verfahren gemäß einem der Ansprüche 1 bis 10, wobei $0,43 \leq n(3\text{-}1)/n(1) \leq 0,92$, bevorzugt $0,44 \leq n(3\text{-}1)/n(1) \leq 0,80$ ist.

12. Verfahren gemäß einem der Ansprüche 1 bis 11, wobei in Schritt i) das System (i) ein Lösungsmittel (5) umfasst, wobei das Lösungsmittel (5) Wasser enthält.

13. Polyoxyalkylenpolyesterpolyol erhältlich nach einem der Ansprüche 1 bis 12.

14. Polyoxyalkylenpolyesterpolyol gemäß Anspruch 13 mit einer mittels der im Experimentalteil angegebenen Methode bestimmten Trübungszahl von $\leq 30$ NTUs bevorzugt von $\leq 20$ NTUs.

15. Verfahren zur Herstellung von Polyurethanen durch Umsetzung des Polyoxyalkylenpolyesterpolyols gemäß Anspruch 13 oder 14 mit einem Polyisocyanat.

**Claims**

1. Process for preparing a polyoxyalkylene polyester polyol having a calculated OH number of 320 mg KOH / g to 530 mg KOH / g, preferably from 350 mg KOH / g to 500 mg KOH / g, by reacting

an H-functional starter compound (1) having n(1) mol of alcoholic hydroxy groups and/or aminic protons, preferably having n(1) mol of alcoholic hydroxy groups, and
a fatty acid ester (2) having n(2) mol of fatty acid ester groups
with an alkylene oxide (3),
optionally in the presence of a basic catalyst (4) and optionally in a solvent (5),
wherein the H-functional starter compound (1) comprises one or more compounds,
wherein at least one H-functional starter compound (1) has a melting point of > 50.0°C, preferably of > 55.0°C, determined according to the method DIN EN ISO 11357-1:2016,
wherein the fatty acid ester (2) has an OH number of less than 100 mg KOH / g,
wherein the proportion of the fatty acid ester (2) is at least 40% by mass based on the total mass of the employed H-functional starter compound (1), the employed fatty acid ester (2) and the employed alkylene oxide (3),
wherein the process comprises the steps of:

(i) providing a system (i) comprising the H-functional starter compound (1) and optionally the basic catalyst (4) optionally in a solvent (5) in a reaction vessel,
(ii) adding n(3-1) mol of a first sub-amount of the alkylene oxide (3) to the system (i) over a period $t_1$ to form an intermediate (ii),
(iii) removing any solvent (5) present from the intermediate (ii) to form an intermediate (iii),
(iv) adding the fatty acid ester (2) to the intermediate
(ii) or to the intermediate (iii) to form the intermediate (iv), wherein n(2) mol of fatty acid ester groups are supplied to the intermediate (ii) or the intermediate (iii),
(v) adding n(3-2) mol of a second sub-amount of the alkylene oxide (3) to the intermediate (iv) over a period $t_2$ to form the polyoxyalkylene polyester polyol,

wherein $(n(3\text{-}2)/n(2)) \cdot t_2/[h] \geq 1.0$,
wherein $n(2)/n(3\text{-}2) \geq 1.05$,
wherein $n(3\text{-}1)/n(1) \geq 0.43$.

2. Process according to Claim 1, wherein the starter compound (1) has a melting point of more than 65°C, preferably of 65°C to 265°C and particularly preferably of 80°C to 180°C.

3. Process according to Claim 1 or 2, wherein the H-functional starter compound (1) having the melting point of > 50.0°C is one or more compounds selected from the group consisting of trimethylolpropane, pentaerythritol, sorbitol, sucrose, hydroquinone, catechol, resorcinol, bisphenol F, bisphenol A, 1,3,5-trihydroxybenzene, 1,12-dodecanediol, the isomers of diaminotoluene, the isomers of diaminodiphenylmethane, preferably from the group consisting of pentaerythriol, sorbitol and sucrose.

4. Process according to any of Claims 1 to 3, wherein the fatty acid ester (2) is one or more compounds selected from the group consisting of cottonseed oil, peanut oil, coconut oil, linseed oil, palm kernel oil, olive oil, corn oil, palm oil, jatropha oil, rapeseed oil, soybean oil, sunflower oil, herring oil, sardine oil and tallow, preferably soybean oil.

5. Process according to any of Claims 1 to 4, wherein the alkylene oxide (3) is propylene oxide and/or ethylene oxide, preferably propylene oxide.

6. Process according to any of Claims 1 to 5, wherein the reaction in step (i) and/or in step (iv), preferably in step (i), is carried out in the presence of a basic catalyst (4), wherein the basic catalyst is preferably an amine, preferably an aromatic amine.

7. Process according to Claim 6, wherein the amine is an aromatic amine and the aromatic amine is one or more compounds selected from the group consisting of imidazole, 1-methylimidazole, 2-methylimidazole, 4(5)-methylimidazole, 2,4(5)-dimethylimidazole, 1-ethylimidazole, 2-ethylimidazole, 1-phenylimidazole, 2-phenylimidazole, 4(5)-phenylimidazole, and N,N-dimethylaminopyridine.

8. Process according to any of Claims 1 to 7, wherein the proportion of the fatty acid ester (2) is from 40% by mass to 60% by mass, preferably from 42% by mass to 58% by mass and particularly preferably from 45% by mass to 55% by mass.

9. Process according to any of Claims 1 to 8, wherein $1.0 \leq (n(3\text{-}2)/n(2)) \cdot t_2/[h] \leq 10.0$, preferably $1.0 \leq (n(3\text{-}2)/n(2)) \cdot t_2/[h] \leq 8.0$.

10. Process according to any of Claims 1 to 9, wherein $1.05 \leq n(2)/n(3\text{-}2) \leq 10.0$, preferably $1.25 \leq n(2)/n(3\text{-}2) \leq 6$.

11. Process according to any of Claims 1 to 10, wherein $0.43 \leq n(3\text{-}1)/n(1) \leq 0.92$, preferably $0.44 \leq n(3\text{-}1)/n(1) \leq 0.80$.

12. Process according to any of Claims 1 to 11, wherein in step i) the system (i) comprises a solvent (5), wherein the solvent (5) contains water.

13. Polyoxyalkylene polyester polyol obtainable according to any of Claims 1 to 12.

14. Polyoxyalkylene polyester polyol according to Claim 13 having a turbidity number determined by the method specified in the experimental section of $\leq 30$ NTUs, preferably of $\leq 20$ NTUs.

15. Process for preparing polyurethanes by reacting the polyoxyalkylene polyester polyol according to Claim 13 or 14 with a polyisocyanate.

**Revendications**

1. Procédé de préparation d'un polyoxyalkylène-polyester-polyol ayant un indice OH calculé de 320 mg de KOH/g à 530 mg de KOH/g, de préférence de 350 mg de KOH/g à 500 mg de KOH/g, par réaction

   d'un composé de départ à fonction H (1) ayant n(1) moles de groupes hydroxy alcooliques et/ou de protons aminés, de préférence ayant n(1) moles de groupes hydroxy alcooliques, et
   d'un ester d'acide gras (2) ayant n(2) moles de groupes ester d'acide gras
   avec un oxyde d'alkylène (3),
   éventuellement en présence d'un catalyseur basique (4) et
   éventuellement dans un solvant (5),

le composé de départ à fonction H (1) comprenant un ou plusieurs composés,

au moins un composé de départ à fonction H (1) présentant un point de fusion, déterminé selon le procédé DIN EN ISO 11357-1:2016, de > 50,0 °C, de préférence de > 55,0 °C,

l'ester d'acide gras (2) présentant un indice OH inférieur à 100 mg de KOH/g,

la proportion de l'ester d'acide gras (2) étant d'au moins 40 % en masse, par rapport à la masse totale du composé de départ (1) à fonction H utilisé, de l'ester d'acide gras (2) utilisé et de l'oxyde d'alkylène (3) utilisé,

le procédé comprenant les étapes suivantes :

(i) la fourniture d'un système (i) comprenant le composé de départ à fonction H (1), éventuellement le catalyseur basique (4), éventuellement dans un solvant (5) dans un récipient de réaction,

(ii) l'ajout de n(3-1) moles d'une première quantité partielle de l'oxyde d'alkylène (3) au système (i) pendant une période de temps $t_1$ pour former un intermédiaire (ii),

(iii) l'élimination du solvant (5) éventuellement présent de l'intermédiaire (ii) pour former un intermédiaire (iii),

(iv) l'ajout de l'ester d'acide gras (2) à l'intermédiaire (ii) ou à l'intermédiaire (iii) pour former l'intermédiaire (iv), n(2) moles de groupes ester d'acide gras étant ajoutées à l'intermédiaire (ii) ou à l'intermédiaire (iii),

(v) l'ajout de n(3-2) moles d'une deuxième quantité partielle de l'oxyde d'alkylène (3) à l'intermédiaire (iv) pendant une période de temps $t_2$ pour former le polyoxyalkylène-polyester-polyol,

où $(n(3\text{-}2)/n(2)) \cdot t_2/[\mathrm{h}] \geq 1,0$,

où $n(2)/n(3\text{-}2) \geq 1,05$,

où $n(3\text{-}1)/n(1) \geq 0,43$.

2. Procédé selon la revendication 1, où le composé de départ (1) présente un point de fusion supérieur à 65 °C, de préférence de 65 °C à 265 °C, et de manière particulièrement préférée de 80 °C à 180 °C.

3. Procédé selon la revendication 1 ou 2, où le composé de départ à fonction H (1) ayant le point de fusion > 50,0 °C, est un ou plusieurs composés et est choisi dans le groupe constitué par le triméthylolpropane, le pentaérythritol, le sorbitol, le saccharose, l'hydroquinone, la brenzcatéchine, le résorcinol, le bisphénol F, le bisphénol A, le 1,3,5-trihydroxybenzène, le 1,12-dodécanediol, les isomères du diaminotoluène, les isomères du diaminodiphénylméthane, de préférence dans le groupe constitué par le pentaérythritol, le sorbitol et le saccharose.

4. Procédé selon l'une quelconque des revendications 1 à 3, où l'ester d'acide gras (2) est un ou plusieurs composés et est choisi dans le groupe constitué par l'huile de graines de coton, l'huile d'arachide, l'huile de coco, l'huile de lin, l'huile de palmiste, l'huile d'olive, l'huile de maïs, l'huile de palme, l'huile de jatropha, l'huile de colza, l'huile de soja, l'huile de tournesol, l'huile de hareng, l'huile de sardine et le suif, de préférence l'huile de soja.

5. Procédé selon l'une quelconque des revendications 1 à 4, où l'oxyde d'alkylène (3) est l'oxyde de propylène et/ou l'oxyde d'éthylène, de préférence l'oxyde de propylène.

6. Procédé selon l'une quelconque des revendications 1 à 5, où la réaction à l'étape (i) et/ou à l'étape (iv) est effectuée de préférence à l'étape (i) en présence d'un catalyseur basique (4), le catalyseur basique étant de préférence une amine, de préférence une amine aromatique.

7. Procédé selon la revendication 6, où l'amine est une amine aromatique et l'amine aromatique est un ou plusieurs composés et est choisie dans le groupe constitué par l'imidazole, le 1-méthylimidazole, le 2-méthylimidazole, le 4(5)-méthylimidazole, le 2,4(5)diméthylimidazole, le 1-éthylimidazole, le 2-éthylimidazole, le 1-phénylimidazole, le 2-phénylimidazole, le 4(5)phénylimidazole, et la N,N-diméthylaminopyridine.

8. Procédé selon l'une quelconque des revendications 1 à 7, où la proportion d'ester d'acide gras (2) est de 40 % en masse à 60 % en masse, de préférence de 42 % en masse à 58 % en masse, et de manière particulièrement préférée de 45 % en masse à 55 % en masse.

9. Procédé selon l'une quelconque des revendications 1 à 8, où $1,0 \leq (n(3\text{-}2)/n(2)) \cdot t_2/[\mathrm{h}] \leq 10,0$, de préférence $1,0 \leq (n(3\text{-}2)/n(2)) \cdot t_2/[\mathrm{h}] \leq 8,0$.

10. Procédé selon l'une quelconque des revendications 1 à 9, où $1,05 \leq n(2)/n(3\text{-}2) \leq 10,0$, de préférence $1,25 \leq n(2)/n(3\text{-}2) \leq 6$.

**11.** Procédé selon l'une quelconque des revendications 1 à 10, où 0,43 ≤ n(3-1)/n(1) ≤ 0,92, de préférence 0,44 ≤ n(3-1)/n(1) ≤ 0,80.

**12.** Procédé selon l'une quelconque des revendications 1 à 11, où, à l'étape i), le système (i) comprend un solvant (5), le solvant (5) contenant de l'eau.

**13.** Polyoxyalkylène-polyester-polyol pouvant être obtenu selon l'une quelconque des revendications 1 à 12.

**14.** Polyoxyalkylène-polyester-polyol selon la revendication 13 ayant un indice de turbidité, déterminé par le procédé indiqué dans la partie expérimentale, de ≤ 30 NTUs, de préférence de ≤ 20 NTUs.

**15.** Procédé de préparation de polyuréthanes par réaction du polyoxyalkylène-polyester-polyol selon la revendication 13 ou 14 avec un polyisocyanate.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1923417 A1
- WO 2013016263 A2
- EP 2177555 A2
- EP 2807199 A1
- WO 2021122401 A1
- DE 1443022
- EP 2028211 A
- WO 2009106244 A
- WO 9820061 A
- US 2004167316 A
- US 4521548 A
- DE 10024313 A
- US 4507475 A
- EP 0693513 A
- EP 1751213 A
- WO 0114456 A
- JP 6157743 A
- WO 9620972 A
- US 3823145 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- DE 1202785 B
- US 3401190 A
- DE 19627907 A
- DE 19628145 A
- DE 19509819 A
- GB 874430 A
- GB 848671 A
- US 3454606 A
- US 3277138 A
- US 3152162 A
- DE 2504400 A
- DE 2537685 A
- DE 2552350 A
- US 3492301 A
- GB 994890 A
- BE 761626 B
- NL 7102524 A
- US 30019731 A
- DE 1022789 C
- DE 1222067 C
- DE 1027394 C
- DE 1929034 A
- DE 2004048 A
- BE 752261 B
- US 3394164 A
- US 3644457 A
- DE 1230778 C
- US 31246053 A
- US 201372 A
- US 3124605 A
- GB 889050 B
- US 3654106 A
- GB 965474 B
- GB 1072956 B
- US 3567763 A
- DE 1231688 C
- DE 1072385 C
- US 3455883 A
- DE OS2624527 A
- DE 2624528
- DE 2636787 A
- DE 1720633 A
- US 3330782 A
- DE 1030558 B
- DE 1804361 A
- DE 2618280 A
- DE 2523633 A
- DE 2732292 A
- US 3620984 A
- US 3645927 A
- US 2834748 A
- US 2917480 A
- US 3629308 A
- DE 2558523 A

**In der Beschreibung aufgeführte Nicht-Patentliteratur**

- **M. IONESCU**. *Advances in Urethanes Science and Technology*, 1998, vol. 14, 151-218

- **B. ULLMANN'S**. *Encyclopedia of Industrial Chemistry*, 05 August 1992, vol. B4, 167ff

- Handbuch Apparate. Vulkan-Verlag Essen, 1990, vol. 1, 188-208
- **W. SIEFKEN**. *Justus Liebigs Annalen der Chemie*, vol. 562, 75-136
- **R. VIEWEG** ; **A. HÖCHTLEN (HRSG.** Kunststoff-Handbuch. Carl-Hanser-Verlag, 1966, vol. VII, 108f, 453ff, 507-510

- **D. RANDALL** ; **S. LEE (HRSG.** The Polyurethanes Book. John Wiley & Sons, Ltd, 2002, 127-261, 232-233, 261
- **G. OERTEL (HRSG.** Kunststoff-Handbuch. Carl-Hanser-Verlag, 1993, vol. VII, 113-115
- **R. VIEWEG** ; **A. HÖCHTLEN (HRSG.** Kunststoff-Handbuch. Carl-Hanser-Verlag, 1966, vol. VII, 103-113